# FASCICULE DE BREVET EUROPEEN

(11) **EP 2 724 099 B1**
(45) Date de publication et mention de la délivrance du brevet: **24.03.2021**
(21) Numéro de dépôt: 12731599.2
(22) Date de dépôt: 22.06.2012
(51) Int. Cl.: F25J 1/02, F25J 1/00, C09K 5/04, F25B 9/06

(54) **PROCEDE DE LIQUEFACTION DE GAZ NATUREL AVEC UN MELANGE DE GAZ REFRIGERANT**
VERFAHREN ZUR VERFLÜSSIGUNG VON ERDGAS MIT EINER KÜHLGASMISCHUNG
METHOD FOR LIQUEFYING NATURAL GAS WITH A MIXTURE OF COOLANT GAS

(30) Priorité: 24.06.2011 FR 1155593
(43) Date de publication de la demande: 30.04.2014
(73) Titulaire: Saipem S.p.A., San Donato Milanese (IT)
(72) Inventeur: BONNISSEL, Marc, F-78180 Montigny Le Bretonneux (FR); DU PARC, Bertrand, F-78960 Voisins Le Bretonneux (FR); ZIELINSKI, Eric, F-78000 Versailles (FR)
(74) Mandataire: Croce, Valeria
(86) Numéro de dépôt international: PCT/FR2012/051426
(87) Numéro de publication internationale: WO 2012/175887

(56) Documents cités:
- EP-A1- 2 336 677
- US-A1- 2010 122 551
- US-A1- 2010 263 405
- US-B1- 6 438 994
- TRUE W R: "REDUCING SCALE, INCREASING FLEXIBILITY ARE TARGETS OF NEW LNG DESIGNS", OIL AND GAS JOURNAL, PENNWELL, HOUSTON, TX, US, 6 décembre 1999 (1999-12-06), pages 54-61, XP001207675, ISSN: 0030-1388
- OLVE SKJEGGEDAL ET AL: "Optimising and Scaling Up the Brayton Nitrogen Refrigeration Cycle for Offshore and Onshore LNG Applications", GASTECH 2009. THE 24TH INTERNATIONAL CONFERENCE AND EXHIBITION FOR THE LNG, LPG AND NATURAL GAS INDUSTRIES, 25-28 MAY 2009, ABU DHABI,, 25 mai 2009 (2009-05-25), page 18pp, XP009144463,

## Description

La présente invention est relative à un procédé de liquéfaction de gaz naturel pour produire du GNL, ou Gaz Naturel Liquéfié, appelé aussi LNG en anglais. Plus particulièrement encore, la présente invention est relative à la liquéfaction de gaz naturel comportant majoritairement du méthane, de préférence au moins 85% de méthane, les autres principaux constituants étant choisis parmi l'azote et des alcanes en C-2 à C-4 à savoir de l'éthane, du propane, du butane.

Une installation de liquéfaction peut être disposée sur un navire ou un support flottant en mer, soit en mer ouverte, soit en zone protégée, telle un port, ou encore une installation à terre dans le cas de petites ou de moyennes unités de liquéfaction de gaz naturel.

Dans le cas d'installation disposée sur un navire, la présente invention est plus particulièrement relative à un procédé de reliquéfaction de gaz à bord de navire de transport de GNL appelé « méthanier », ledit gaz à reliquéfier étant le résultat du réchauffage et évaporation partielle du GNL contenu dans les cuves dudit navire, ledit gaz évaporé, en général majoritairement du méthane étant appelé en anglais « boil off ».

Le gaz naturel à base de méthane est soit un sous-produit des champs pétroliers, produit en quantité faible ou moyenne, en général associé à du pétrole brut, soit un produit majeur dans le cas des champs de gaz, où il est alors en combinaison avec d'autres gaz, principalement des alcanes en C-2 à C-4, du CO2, de l'azote.

Lorsque le gaz naturel est associé en faible quantité à du pétrole brut, il est en général traité et séparé, puis utilisé sur place comme carburant dans des turbines ou des moteurs à piston pour produire de l'énergie électrique et des calories utilisées dans les processus de séparation ou de production.

Lorsque les quantités de gaz naturel sont importantes, voire considérables, on cherche à le transporter de manière à pouvoir les utiliser dans des régions éloignées, en général sur d'autres continents et, pour ce faire, la méthode préférée est de le transporter à l'état de liquide cryogénique (-165°C) sensiblement à la pression atmosphérique ambiante. Des navires de transport spécialisés appelés « méthaniers » possèdent des cuves de très grandes dimensions et présentant une isolation extrême de manière à limiter l'évaporation pendant le voyage.

La liquéfaction du gaz en vue de son transport s'effectue en général à proximité du site de production, en général à terre, et nécessite des installations considérables pour atteindre des capacités de plusieurs millions de tonnes par an, les plus grosses unités existantes regroupent trois ou quatre unités de liquéfaction de 3-4 Mt par an de capacité unitaire.

Ce procédé de liquéfaction nécessite des quantités d'énergie mécanique considérables, l'énergie mécanique étant en général produite sur place en prélevant une partie du gaz pour produire l'énergie nécessaire au procédé de liquéfaction. Une partie du gaz est alors utilisé comme carburant dans des turbines à gaz, des turbines à vapeur ou des moteurs thermiques à pistons.

De multiples cycles thermodynamiques ont été développés en vue d'optimiser le rendement énergétique global. Il existe deux types principaux de cycles. Un premier type basé sur la compression et la détente de fluide réfrigérant, avec changement de phase, et un second type basé sur la compression et la détente de gaz réfrigérant sans changement de phase. On appelle « fluide réfrigérant », ou « gaz réfrigérant », un gaz ou mélange de gaz, circulant en circuit fermé et subissant des phases de compression, le cas échéant de liquéfaction, puis des échanges de chaleur avec le milieu extérieur, puis ensuite des phases de détente, le cas échéant d'évaporation, et enfin des échanges de chaleur avec le gaz naturel à liquéfier comprenant du méthane, qui peu à peu se refroidit pour atteindre sa température de liquéfaction à pression atmosphérique, c'est à dire environ -165°C dans le cas du GNL.

Ledit premier type de cycle, avec changement de phase, est en général utilisé sur des installations à terre et nécessite une grande quantité d'équipements et une emprise au sol considérable. De plus, les fluides réfrigérants, en général sous forme de mélanges, sont constitués de butane, de propane, d'éthane et de méthane, ces gaz étant dangereux car ils risquent, en cas de fuite, de provoquer des explosions ou des incendies considérables. Par contre, malgré la complexité des équipements requis, ils demeurent les plus efficaces et nécessitent une énergie de l'ordre de 0.3kWh par kg de GNL produit.

De nombreuses variantes de ce premier type de procédé avec changement de phase du fluide réfrigérant ont été développées et chaque fournisseur de technologie ou d'équipements, possède sa formulation de mélanges, associée à des équipements spécifiques, tant pour les procédés dits « en cascade », que pour les procédés dits en « cycle mixte ». La complexité des installations provient du fait que dans les phases où le fluide réfrigérant se trouve à l'état liquide, et plus particulièrement au niveau des séparateurs et des conduites de raccordement, il convient d'installer des collecteurs gravitaires pour rassembler la phase liquide et la diriger au coeur des échangeurs thermiques où elle se vaporisera alors au contact du méthane à refroidir et à liquéfier, pour obtenir du GNL. Ces dispositifs sont très encombrants, mais ceci ne pose pas de problèmes dans le cas d'installations à terre, car il est en général simple de disposer d'une surface de terrain suffisante pour loger tous ces équipements encombrants les uns à côté des autres. Ainsi, pour les installations à terre, tous ces équipements de compression, d'échangeurs et de collecteurs sont en général installés les uns à côté des autres sur des surfaces considérables de 25 à 50 000m², voire plus.

Dans US 6 438 994, on décrit un procédé de liquéfaction avec changement de phase dans lequel le gaz réfrigérant condense partiellement seulement vers l'état liquide du fait qu'il comprend un mélange de premier composant choisi parmi l'argon et l'azote (qui condensent vers l'état liquide aux températures et pressions du procédé) et l'autre composant choisi parmi l'hélium et le néon (qui ne condensent pas vers l'état liquide).

Le second type de procédé de liquéfaction, procédé sans changement de phase du gaz réfrigérant, est un cycle de Brayton inversé, ou cycle de Claude utilisant un gaz tel l'azote. L'efficacité de ce second type est moindre, car il nécessite en général une énergie de l'ordre de 0.5 kWh/kg de GNL produit, soit environ 20.84 kW x jour/t et, par contre, il présente un avantage considérable en termes de sécurité, car le gaz réfrigérant du cycle, l'azote, est inerte, donc incombustible, ce qui est très intéressant lorsque les installations sont concentrées sur un espace réduit, par exemple sur le pont d'un support flottant installé en mer ouverte, lesdits équipements étant souvent installés sur plusieurs niveaux, les uns au-dessus des autres sur une surface réduite au strict minimum. Ainsi, en cas de fuite du gaz réfrigérant, il n'y a aucun danger d'explosion et il suffit alors de réinjecter dans le circuit la fraction de gaz réfrigérant perdue.

De plus, ce procédé de liquéfaction de gaz naturel sans changement de phase est très intéressant dans le cas de supports flottants, car, du fait de l'absence de phase liquide dans le gaz réfrigérant, les équipements sont de conception beaucoup plus simple. En effet, dans de telles installations, l'ensemble des équipements bouge quasiment en permanence au rythme des mouvements du support flottant (roulis, tangage, lacet, embardée, cavalement, pilonnement). Et la gestion d'un procédé avec changement de phase impliquant une phase liquide du fluide réfrigérant serait extrêmement délicate même pour des mouvements faibles du support flottant, voire quasiment impossible pour les mouvements extrêmes, alors que dans des installations fixes à terre le problème des mouvements ne se pose pas.

Malgré le rendement énergétique inférieur du procédé de liquéfaction sans changement de phase du gaz réfrigérant, ce dernier reste très intéressant car les équipements, principalement les compresseurs, les détendeurs, en des turbines, et les échangeurs sont beaucoup plus simples que les équipements requis pour un procédé de liquéfaction impliquant des cycles à changement de phase d'un fluide réfrigérant, tant en termes de technologie desdits équipements que de maintenance de ces équipements dans un environnement confiné, à savoir un support flottant ancré en mer. De plus, la conduite des installations en fonctionnement reste plus simple, car ce type de cycle est peu sensible aux variations de composition du gaz à liquéfier, à savoir un gaz naturel constitué d'un mélange où prédomine du méthane. En effet, dans le cas du cycle à changement de phase du fluide réfrigérant, pour que les rendements restent optimum, le fluide réfrigérant doit être adapté à la nature et composition du gaz à liquéfier et la composition du fluide réfrigérant doit le cas échéant être modifiée au cours du temps, en fonction de la composition du mélange de gaz naturel à liquéfier produit par le champ pétrolier.

Dans son principe la mise en œuvre d'un cycle du procédé de liquéfaction sans changement de phase du gaz réfrigérant tel que de l'azote comporte les 4 éléments principaux suivants:
- un compresseur qui augmente la pression du gaz réfrigérant et le fait passer de la température ambiante à basse pression à une température élevée à haute pression,
- un échangeur de chaleur qui refroidit le gaz réfrigérant de la température élevée et haute pression sensiblement jusqu'à la température ambiante et haute pression,
- un dispositif de détente, en général une turbine de décompression, dans laquelle le gaz réfrigérant se détend : sa pression baisse et sa température est alors très basse ; tandis que, simultanément, on récupère au niveau de la turbine de détente l'énergie mécanique qui est alors en général directement réinjectée au niveau du compresseur qui lui est couplé,
- un échangeur cryogénique dans lequel circule d'un côté le gaz réfrigérant à température cryogénique, et de l'autre le gaz à liquéfier, ledit gaz réfrigérant absorbant les calories du gaz à liquéfier, donc se réchauffant, tandis que ledit gaz à liquéfier, cédant ses calories, se refroidit jusqu'à atteindre l'état liquide recherché. En fin de cycle de circulation, le gaz réfrigérant se trouve sensiblement à la température ambiante et il est alors réintroduit dans le compresseur pour effectuer un nouveau cycle en circuit fermé.

Pendant toute la durée du cycle le gaz réfrigérant reste à l'état gazeux et circule de manière continue comme expliqué précédemment : il cède peu à peu des frigories, donc absorbe peu à peu des calories du gaz à liquéfier, à savoir un mélange constitué majoritairement de méthane et d'autres traces de gaz.

La circulation du gaz à liquéfier se fait à contre-courant du gaz réfrigérant, c'est à dire que ledit gaz naturel comprenant du méthane, entre sensiblement à température ambiante dans l'échangeur au niveau de la sortie du gaz réfrigérant où ce dernier est alors sensiblement à la température ambiante. Puis, ledit gaz naturel comprenant du méthane progresse dans l'échangeur vers les zones plus froides et transfert ses calories au fluide réfrigérant : le gaz naturel comprenant du méthane se refroidit et le gaz réfrigérant se réchauffe. Au fur et à mesure de la progression du gaz naturel méthane dans l'échangeur, sa température baisse, puis en fin de parcours il se liquéfie et sa température continue à baisser jusqu'à atteindre la température de T3=-165°C pour un gaz contenant 85% de méthane.

Pendant tout son parcours dans le ou les échangeurs de chaleur, la liquéfaction du gaz naturel se fait sous pression P0 de 5 à 50 bars, en général 10 à 20 bars, en quatre phases principales :
- phase 1 : refroidissement du gaz naturel depuis la température ambiante T0 jusqu'à T1=-50°C environ (cette température dépend de la composition du gaz naturel),
- phase 2 : liquéfaction du gaz naturel (passage de l'état gazeux à l'état liquide). Comme le gaz naturel est un mélange gazeux sous une pression P0 d'environ quelques dizaines de bars, ce changement d'état s'échelonne entre T1=-50°C et T2=-120°C environ,
- phase 3 : le gaz naturel une fois entièrement liquéfié (GNL) est alors à environ T2=-120°C, toujours sous une pression P0 d'environ quelques dizaines de bars. Au sein du ou des échangeurs, le GNL continue son refroidissement pour atteindre la température T3 de -165°C, température correspondant à une phase liquide du GNL sous la pression atmosphérique,
- phase 4 : Le liquide obtenu ou GNL est alors dépressurisé jusqu'à la pression atmosphérique où il reste à l'état liquide en raison de sa température T3 inférieure ou égale à -165°C, et peut être transféré vers un réservoir de stockage isolé, ou le cas échéant chargé directement sur un navire de transport tel un méthanier.

La phase 2 est la plus consommatrice en énergie, car il faut fournir au gaz toute l'énergie correspondant à sa chaleur latente de vaporisation. La phase 1 est un peu moins consommatrice en énergie, et la phase 3 est la moins consommatrice en énergie, par contre elle se fait aux températures les plus basses, c'est à dire aux environs de -165°C.

Les valeurs mentionnées ci-dessus pour T1, T2 et T3 sont adaptées à un gaz naturel constitué de 85% de méthane et 15% des dits autres composants azote et alcanes en C-2 à C-4, et peuvent varier sensiblement pour un gaz de composition différente.

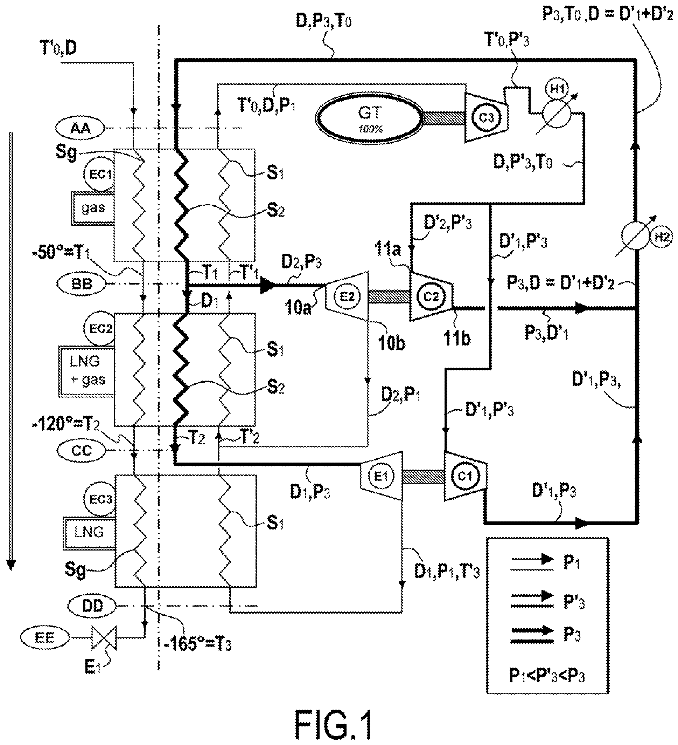

Sur la figure 1, on a représenté un schéma d'installation d'un procédé standard de liquéfaction de gaz naturel impliquant un gaz réfrigérant constitué d'azote sans changement de phase du gaz réfrigérant tel que décrit ci-dessus et dont la description est explicité plus loin.

Dans EP 1 939 564, on décrit un procédé de liquéfaction de gaz naturel du type sans changement de phase, dans lequel le gaz réfrigérant est de l'air, c'est-à-dire un mélange d'azote et essentiellement d'oxygène et d'argon. L'oxygène et l'argon sont des gaz à températures de point critique plus élevées que celle de l'azote, de sorte que ce mélange de gaz réfrigérant (l'air) nécessite de réduire la pression du gaz réfrigérant pour éviter toute condensation vers l'état liquide, comparativement à un gaz réfrigérant constitué exclusivement d'azote. Le mélange circulant à plus faible pression, les échanges de chaleurs nécessitent des débits plus important et donc des conduites de plus grands diamètres et des échangeurs de surfaces plus importantes, ce qui contribue à augmenter le coût et l'encombrement de l'installation et réduit le rendement thermodynamique global du procédé.

Le but de la présente invention est de fournir un procédé de liquéfaction de gaz naturel du type sans changement de phase du gaz réfrigérant apte à être installé sur un navire ou support flottant qui présente un rendement énergétique amélioré, à savoir une énergie totale consommée dans le procédé minimale en termes de kWh pour obtenir 1 tonne de GNL et/ou qui, présente des transferts thermiques dans les échangeurs accru et/ou qui permette de mettre en œuvre une installation de liquéfaction plus compacte et plus efficace.

Pour ce faire, la présente invention fournit un procédé de liquéfaction d'un gaz naturel comprenant majoritairement du méthane, de préférence, au moins 85% de méthane, les autres composants comprenant essentiellement de l'azote et des alcanes en C-2 à C-4, dans lequel on liquéfie le dit gaz naturel à liquéfier par circulation dudit gaz naturel à une pression P0 supérieure ou égale à la pression atmosphérique (Patm.), de préférence P0 étant supérieure à la pression atmosphérique, dans au moins 1 échangeur de chaleur cryogénique par circulation en circuit fermé à contre-courant en contact indirect avec au moins un flux de gaz réfrigérant restant à l'état gazeux comprimé à une pression P1 entrant dans le dit échangeur cryogénique à une température T3' inférieure à T3, T3 étant la température en sortie dudit échangeur cryogénique, et T3 étant inférieure ou égale à la température de liquéfaction du dit gaz naturel liquéfié à la pression atmosphérique, caractérisé en ce que le dit gaz réfrigérant consiste essentiellement en un mélange binaire d'azote et d' un autre constituant choisi parmi le néon et l'hydrogène où le néon ou l'hydrogène représente de 20 à 50% molaire du dit mélange .

On entend ici par « consiste essentiellement » que des traces d'autres gaz dans des proportions faibles, ne dépassant pas globalement 1%, ne perturbent pas le procédé ni son rendement global, et sont donc acceptables comme explicité plus loin.

Les inventeurs ont en effet découvert et démontré que la mise en œuvre d'un gaz réfrigérant comprenant un mélange selon l'invention, permet d'augmenter la pression P1 sans que le point de rosée du mélange ainsi constitué, ne soit atteint. Plus particulièrement, à -170°C, la pression de saturation d'un mélange azote + néon ou azote + hydrogène est supérieur à celle de l'azote seule, ce qui permet d'augmenter la pression du mélange sans engendrer de condensation vers l'état liquide d'aucun des composants du mélange, du fait que le point critique du néon et de l'hydrogène est plus faible que celui de l'azote. Ainsi, le gaz réfrigérant ne condense pas vers l'état liquide mais reste à l'état gazeux bien que sa pression soit augmentée de manière très significative. Il en résulte une augmentation de la pression P3 et une amélioration du rendement thermodynamique global ainsi qu'un meilleur transfert thermique au sein des échangeurs cryogéniques, ce qui augmente le rendement énergétique du procédé, c'est-à-dire minimise l'énergie totale consommée pour produire une quantité donnée de GNL pendant une durée donnée, et donc permet de mettre en œuvre des installations plus compacte, notamment des machines tournantes, compresseur et turbines, plus compactes et des conduites de circulation de plus petite section. Le mélange de gaz réfrigérant selon la présente invention est donc particulièrement avantageux dans le cas où on met en œuvre le procédé sans changement de phase à bord d'un support flottant où la place est limitée.

Le néon et l'hydrogène présentent en effet une température de liquéfaction inférieure à celle de l'azote (laquelle est de -196°C à Patm) de sorte qu'un mélange selon l'invention présente à pression donnée un point de rosée plus bas que celui de l'azote seul et de ce fait, à une même température T3' que l'azote seul, la pression P1 du mélange selon l'invention est supérieure, d'où il résulte un meilleur rendement thermodynamique et de meilleures conditions d'échange thermique, donc un meilleur rendement énergétique du procédé en terme d'énergie totale consommée pour la liquéfaction du gaz naturel, en général exprimé en kW x h/kg ou en kW x jour/tonne (en anglais kW x day /t= kW x d /t) de GNL produit.

Le dit mélange de gaz réfrigérants consiste en un mélange binaire d'azote et néon. Bien que le mélange azote-hydrogène présente un meilleur rendement énergétique global, le néon est préféré au regard des risque d'explosion plus important de l'hydrogène et du niveau de pression P1-P2-P3 plus élevé dans le cas dudit mélange azote-hydrogène, l'hydrogène pouvant avoir de plus une certaine propension à percoler à travers les joints en élastomères et même à travers les parois métalliques de faible épaisseur. Le néon est donc préféré à l'hydrogène car il constitue un gaz inerte et ne présente pas de danger dans une installation compacte installée à bord d'un support flottant où la place est limitée.

Conformément à l'invention, le dit mélange de gaz réfrigérants comprend un mélange binaire d'azote et dedit autre constituant avec une teneur molaire en dit autre constituant 20 à 50%. Au-delà de 50%, on observe une diminution du rendement énergétique.

Plus particulièrement encore, dans le procédé selon l'invention, on liquéfie ledit gaz naturel à liquéfier en réalisant les étapes concomitantes suivantes de :
(a) circulation dudit gaz naturel à liquéfier circulant à une pression P0 supérieure ou égale à la pression atmosphérique (Patm), de préférence P0 étant supérieure à la pression atmosphérique, dans au moins 3 échangeurs de chaleur cryogéniques disposés en série dont :
   - un premier échangeur dans lequel le dit gaz naturel entrant à une température T0 est refroidi et sort à une température T1 inférieure à T0, puis
   - un deuxième échangeur dans lequel le gaz naturel est entièrement liquéfié et sort à une température T2 inférieure à T1 et supérieure à T3, et
   - un troisième échangeur dans lequel ledit gaz naturel liquéfié est refroidi de T2 à T3, et
(b) circulation en circuit fermé à contre-courant d'au moins un premier flux de gaz réfrigérant à l'état gazeux à une pression P1 inférieure à P3, en contact indirect avec et à contre-courant du flux de gaz naturel, ledit premier flux (S1) à une pression P1 traversant les 3 échangeurs en entrant dans le dit troisième échangeur à une température T3' inférieure à T3, puis entrant dans le dit deuxième échangeur à T2' inférieure à T2, puis entrant dans ledit premier échangeur à T1' inférieure à T1 et sortant dudit premier échangeur à une température T0' inférieure ou égale à T0,
   - le dit premier flux de gaz réfrigérant à P1 et T3' étant obtenu par détente dans au moins un premier détendeur d'au moins une première partie d'au moins un deuxième flux de gaz réfrigérant comprimé à P3 supérieure à P1 circulant à co-courant dudit gaz naturel entrant dans ledit premier échangeur à T0 et sortant dudit deuxième échangeur sensiblement à T2, et
   - une deuxième partie dudit deuxième flux de gaz réfrigérant comprimé P3 circulant à co-courant dudit gaz naturel entrant dans ledit premier échangeur à T0 et sortant dudit premier échangeur sensiblement à T1, est détendue dans un deuxième détendeur à la dite pression P1 et à une dite température T2', et est recyclée pour rejoindre ledit premier flux à l'entrée dudit deuxième échangeur ; le débit D2 de la dite deuxième partie de deuxième flux étant supérieur au débit D1 de la première partie de deuxième flux, et
(c) ledit deuxième flux comprimé à P3 étant obtenu par compression par au moins un compresseur suivi d'au moins un refroidissement dudit premier flux de gaz réfrigérant recyclé sortant du dit premier échangeur, de préférence au moins un premier compresseur couplé audit premier détendeur, et
(d) de préférence, après l'étape (a) on dépressurise le gaz naturel liquéfié depuis la pression P0 à la pression atmosphérique le cas échéant.

La séparation du deuxième flux S2 en deux parties de débits différents D1 et D2 en sortie du premier échangeur, de préférence avec D2 supérieur à D1, est avantageuse car l'essentiel de l'énergie consommée se produit dans la phase 2 au sein du deuxième échangeur. Ainsi seule une partie mineure de débit D1 est détendue pour atteindre la température la plus basse de sensiblement -165°C, et traverse le troisième échangeur EC3 où se produit la phase 3 tandis que le flux D=D1+D2 du circuit S1 traverse alors l'échangeur cryogénique EC2 pour assurer la phase 2 de la liquéfaction.

Dans un mode de réalisation, on met en œuvre 3 compresseurs dont au moins un premier compresseur et un deuxième compresseur disposés en parallèle, comprenant :
- un compresseur dénommé troisième compresseur actionné par un moteur, de préférence une turbine à gaz, pour comprimer de P1 à P'3 la totalité du premier flux de gaz réfrigérant, P'3 étant comprise entre P1 et P3, et
- un premier compresseur couplé au premier détendeur consistant en une turbine, pour comprimer de P'3 à P3 au moins une première partie dudit premier flux de gaz réfrigérant sortant dudit premier échangeur, et
- un deuxième compresseur couplé au deuxième détendeur consistant en une turbine, pour comprimer de P'3 à P3 au moins une deuxième partie dudit premier flux de gaz réfrigérant sortant dudit premier échangeur.

Plutôt que de recycler après détente une partie D2 du deuxième flux en provenance de la sortie du premier échangeur, pour rejoindre le premier flux à l'entrée du deuxième échangeur, dans un mode préféré de réalisation, on recycle cette partie D2 du deuxième flux à l'entrée du deuxième échangeur à une pression intermédiaire P2 supérieure à P1 dans un troisième circuit S3 indépendant et parallèle au circuit S1, c'est à dire à co-courant de S1. Du fait que l'essentiel de l'énergie consommée pour la phase 2 du procédé est transférée au sein dudit deuxième échangeur, ceci permet d'augmenter encore les transferts thermiques et le rendement énergétique du procédé.

Plus précisément, pour ce faire, dans un mode préféré de réalisation du procédé selon l'invention, on liquéfie le dit gaz naturel à liquéfier en réalisant les étapes concomitantes suivantes de :
(a) circulation dudit gaz naturel à liquéfier circulant à une pression P0 supérieure ou égale à la pression atmosphérique, de préférence P0 étant supérieure à la pression atmosphérique, dans au moins 3 échangeurs de chaleur cryogéniques disposés en série dont :
   - un premier échangeur dans lequel le dit gaz naturel entrant à une température T0 est refroidi et sort à une température T1 inférieure à T0, puis
   - un deuxième échangeur dans lequel le gaz naturel est entièrement liquéfié et sort à une température T2 inférieure à T1 et supérieure à T3, et
   - un troisième échangeur dans lequel ledit gaz naturel liquéfié est refroidi de T2 à T3, et
(b) circulation à circuit fermé d'au moins deux flux de gaz réfrigérant à l'état gazeux dénommés premier et troisième flux respectivement à des pressions différentes P1 et P2, traversant au moins deux dits échangeurs en contact indirect avec et à contre-courant du flux de gaz naturel, comprenant :
   - un premier flux de gaz réfrigérant à une pression P1 inférieure à P3 traversant les 3 échangeurs entrant dans le dit troisième échangeur à une température T3' inférieure à T3, puis entrant à T2' inférieure à T2 dans le dit deuxième échangeur, puis entrant à T1' inférieure à T1 dans ledit premier échangeur et sortant dudit premier échangeur à une température T0' inférieure ou égale à T0, le dit premier flux de gaz réfrigérant à P1 et T3' étant obtenu par détente dans au moins un premier détendeur d'une première partie d'un deuxième flux de gaz réfrigérant comprimé à la pression P3 supérieure à P2, ledit deuxième flux circulant en contact indirect avec et à co-courant dudit flux de gaz naturel, en entrant dans ledit premier échangeur à T0 et ladite première partie du deuxième flux sortant dudit deuxième échangeur sensiblement à T2, et
   - un troisième flux à une pression P2 supérieure à P1 et inférieure à P3 circulant en contact indirect avec et à co-courant dudit premier flux, traversant uniquement les dits deuxième et premier échangeurs, entrant dans ledit deuxième échangeur sensiblement à une température T2' et sortant dudit premier échangeur sensiblement à T0', le dit troisième flux de gaz réfrigérant à P2 et T2 étant obtenu par détente dans un deuxième détendeur d'une deuxième partie dudit deuxième flux de gaz réfrigérant sortant dudit premier échangeur sensiblement à T1, le débit D2 de la dite deuxième partie de deuxième flux étant supérieur au débit D1 de la première partie de deuxième flux,
(c) le dit deuxième flux de gaz réfrigérant comprimé à la pression P3 étant obtenu par compression par au moins deux compresseurs et refroidissement desdits premier et troisième flux de gaz réfrigérant sortant du dit premier échangeur à P1 et respectivement P2, de préférence par au moins deux premier et deuxième compresseurs disposés en série et couplés respectivement auxdits premier et deuxième détendeurs consistant en des turbines à gaz, et
(d) de préférence, après l'étape (a) on dépressurise le gaz naturel liquéfié sortant dudit troisième échangeur à T3, depuis la pression P0 à la pression atmosphérique le cas échéant.

Dans un mode encore préféré de réalisation, on met en œuvre des moyens pour faire varier de façon contrôlée la dite pression P2.

Plus particulièrement, pour ce faire, au moins un compresseur est couplé à un moteur permettant de faire varier de façon contrôlée au moins la pression P2, en apportant de la puissance de façon contrôlée audit compresseur, de préférence au moins 3%, de préférence encore de 3 à 30% de la puissance totale apportée à l'ensemble des dits compresseurs mis en œuvre. Plus particulièrement encore, on observe que lorsque l'on augmente la puissance injectée au niveau dudit moteur, la pression P1 reste constante, la pression P2 augmente et le rendement augmente, c'est à dire que la consommation en énergie exprimée en kW x jour/t diminue, jusqu'à atteindre un minimum, puis en augmentant encore la puissance apportée par ledit moteur, notamment au-delà de 30% de la puissance totale, la dite consommation en énergie augmente à nouveau.

Plus particulièrement encore, on peut moduler et contrôler spécifiquement la valeur de la pression P2 en montant en série les deux premier et deuxième compresseurs C1 et C2 et en couplant le premier compresseur C1, déjà couplé avec la turbine de détente E1, avec un premier moteur complémentaire M1 permettant de moduler et contrôler la puissance apportée à C1 et donc la valeur de la pression P2.

Ce procédé est plus particulièrement avantageux car il permet, en modulant et contrôlant spécifiquement l'apport de puissance complémentaire au niveau de M1, de contrôler spécifiquement la valeur de la pression P2 dudit troisième flux, et permet alors de ce fait d'optimiser le point de fonctionnement du procédé, à savoir minimiser l'énergie consommée notamment lorsque, comme cela arrive en cours d'exploitation, la composition du gaz naturel à liquéfier varie.

Plus particulièrement encore, on observe que lorsque l'on augmente la puissance injectée au niveau dudit premier moteur, la pression P1 reste sensiblement constante, la pression P2 augmente et le rendement augmente, c'est à dire que la consommation en énergie exprimée en kW x jour/t diminue, jusqu'à atteindre un minimum, puis en augmentant encore la puissance apportée par ledit moteur, notamment au-delà de 30% de la puissance totale, ladite consommation en énergie augmente à nouveau.

Une unité de liquéfaction conventionnelle est dimensionnée par rapport aux puissances des turbines à gaz disponibles, les turbines de forte puissance étant couramment de 25MW.

On cherche en général à augmenter la puissance de l'installation, et il est alors possible d'installer en parallèle deux turbines à gaz identiques pour obtenir une puissance double, mais on alors deux lignes de machines tournantes, ce qui augmente les encombrements, les quantités de conduites et bien sûr les coûts.

En installant une seule turbine GT de n MW et en rajoutant de la puissance inférieure à n MW au niveau d'un dit deuxième moteur M2, le fonctionnement du procédé est identique en termes de rendement à celui utilisant deux turbines à gaz de n MW en parallèle.

Ainsi, l'ajout de puissance au niveau du deuxième moteur M2, de préférence grâce à une motorisation électrique, donne plus de souplesse au fonctionnement et permet ainsi un accroissement de puissance. En revanche, le rendement de l'ensemble reste inchangé.

Si par contre, on fournit la même puissance au niveau du premier moteur M1, la puissance globale est toujours la même, mais dans ce cas le rendement de l'ensemble est amélioré, ce qui représente un gain d'énergie consommée pour la même puissance globale, par rapport à une injection de puissance au niveau du deuxième moteur M2.

De la même manière, en installant une seule turbine GT de n MW et en rajoutant de la puissance au niveau de la turbine GT, inférieure à n MW, le fonctionnement du procédé est identique en termes de rendement à celui utilisant deux turbines à gaz de n MW en parallèle.

Ainsi, en considérant une turbine à gaz l'ajout de puissance au niveau de la turbine GT, donne plus de souplesse au fonctionnement et permet ainsi un accroissement de puissance. En revanche, le rendement de l'ensemble reste inchangé.

Si par contre, on fournit la même puissance au niveau du premier moteur M1, la puissance globale est toujours la même, mais dans ce cas le rendement de l'ensemble est amélioré ce qui représente un gain d'énergie consommée pour la même puissance globale apportée, par rapport à une injection de puissance au niveau du deuxième moteur M2.

Ainsi, en fonction de la production de gaz naturel, tant en quantité qu'en qualité, en provenance des nappes souterraines, on utilisera avantageusement une turbine à gaz GT, par exemple de 25MW, à plein régime en permanence, que l'on complètera, voire le cas échéant modulera, par
- injection de puissance au niveau de la turbine GT ou du deuxième moteur M2 sans changer le rendement global, et
- injection de puissance au niveau du premier moteur M1 ce qui a pour effet d'améliorer le rendement global, jusqu'à atteindre un optimum, c'est à dire un minimum de consommation d'énergie.

Dans un mode préféré de réalisation, les deux premier et deuxième compresseurs disposés en série sont couplés respectivement auxdits premier et deuxième détendeurs consistant en des turbines de récupération d'énergie, et
- au moins le dit premier compresseur est couplé à un premier moteur, et
- une turbine à gaz est couplée soit audit deuxième compresseur, celui-ci comprimant ledit deuxième flux de gaz réfrigérant directement à P3, soit à un troisième compresseur monté en série après le deuxième compresseur, le dit troisième compresseur comprimant de P'3 à P3 ledit deuxième flux de gaz réfrigérant, la dite turbine à gaz apportant la majeur partie de la puissance totale apportée à l'ensemble des dits compresseurs mis en oeuvre.

Dans ce mode de réalisation, l'essentiel de la puissance apportée auxdits compresseurs est injecté au niveau des deuxième et/ou troisième compresseurs comprimant le flux de gaz réfrigérant à haute pression P'3/P3 et la récupération d'énergie au niveau des premier et deuxième détendeurs est réinjectée au niveau des premier et deuxième compresseurs, comprimant les gaz réfrigérants circulant à basse et moyenne pression P1 et P2. En effet, la fraction de fluide traversant le compresseur C1 représente une faible fraction du débit total (par exemple 10-15%) et l'énergie nécessaire est du même ordre de grandeur que l'énergie récupérée par la turbine E1. Il est donc intéressant de coupler les deux. De plus un ajout contrôlé de puissance en C1 permet d'améliorer le rendement énergétique du système en pilotant P1 et P2 indépendamment l'une de l'autre.

D'autre part, la plus grande part de la puissance apportée aux compresseurs est injectée dans les compresseurs fournissant la plus grande pression (P'3, P3), ce qui permet d'augmenter la capacité de production du procédé, tout en améliorant son rendement énergétique.

En outre, la mise en œuvre desdits premier et deuxième compresseurs en série couplés à desdits premier et deuxièmes détendeurs selon la présente invention permet aussi d'améliorer la compacité de l'installation ce qui est particulièrement avantageux pour la mise en œuvre d'un procédé à bord d'un support flottant où la place est limitée.

Dans la présente description, on entend par « compresseur couplé à un détendeur/turbine ou moteur » ou encore « compresseur actionné par un moteur » (ou vice versa un « détendeur/turbine ou moteur couplé au compresseur ») que l'arbre de sortie de la turbine ou respectivement du moteur entraine l'arbre d'entrée du compresseur, c'est-à-dire, transfère une énergie mécanique à l'arbre du compresseur. Il s'agit donc d'un couplage mécanique du compresseur au détendeur/turbine ou respectivement du compresseur au moteur.

Plus particulièrement, ledit moteur peut être soit un moteur thermique, soit de préférence un moteur électrique, ou toute autre installation capable de fournir de l'énergie mécanique ; et les compresseurs sont du type rotatif à turbine, encore dénommé compresseur centrifuge.

De préférence encore, dans le procédé, on met en œuvre deux compresseurs montés en série, comprenant :
(i) un premier compresseur couplé audit premier détendeur, comprimant de P1 à P2 la totalité du dit premier flux de gaz réfrigérant sortant dudit premier échangeur, et
(ii) un deuxième compresseur couplé audit deuxième détendeur, comprimant de P2 à au moins P'3, P'3 étant supérieure à P2 et inférieure ou égale à P3, d'une part le dit troisième flux de gaz réfrigérant sortant à P2 du dit premier échangeur, et d'autre part le dit premier flux de gaz réfrigérant comprimé à P2 sortant dudit premier compresseur, pour obtenir le dit deuxième flux de gaz réfrigérant à P3 et T0 après refroidissement, et
(iii) ledit premier compresseur est couplé à un premier moteur, et ledit deuxième compresseur étant couplé à au moins une turbine à gaz, ledit premier moteur permettant de faire varier de façon contrôlée la pression P2 en apportant de la puissance de façon contrôlée audit premier compresseur, ledit premier moteur apportant au moins 3%, de préférence encore de 3 à 30% de la puissance totale apportée à l'ensemble des dits compresseurs mis en œuvre, ledit deuxième compresseur actionné par une turbine à gaz fournissant de 97 à 70% de la puissance totale mis en œuvre.

Cette première variante de réalisation est avantageuse en ce qu'elle permet en œuvre une installation la plus compacte en termes d'encombrement à bord du support flottant.

Plus particulièrement, on met en œuvre trois compresseurs dont deux premier et deuxième compresseurs montés en série, comprenant :
(i) un premier compresseur actionné par un premier moteur et couplé audit premier détendeur, comprimant de P1 à P2 la totalité du dit premier flux de gaz réfrigérant sortant dudit premier échangeur, et
(ii) un deuxième compresseur actionné par un deuxième moteur et couplé audit deuxième détendeur, comprimant de P2 à P'3, P'3 étant supérieur à P2 et inférieure à P3, d'une part le dit troisième flux de gaz réfrigérant sortant à P2 du dit premier échangeur, et d'autre part le dit premier flux de gaz réfrigérant comprimé à P2 sortant dudit premier compresseur, et
(iii) un troisième compresseur actionné par une turbine à gaz pour fournir la majeure partie de l'énergie et comprimer de P'3 à P3 la totalité des premier et troisième flux de gaz réfrigérant comprimés par le deuxième compresseur, pour obtenir le dit deuxième flux de gaz réfrigérant à P3 et T0 après refroidissement, et
(iv) ledit premier moteur apporte au moins 3%, de préférence encore de 3 à 30% de la puissance totale apportée à l'ensemble des dits compresseurs mis en œuvres, la turbine à gaz couplée au dit troisième compresseur, ainsi qu'un deuxième moteur couplé au deuxième compresseur fournissant ensemble de 97 à 70% de la puissance totale apportée à l'ensemble des dits compresseurs mis en œuvres.

Cette deuxième variante de réalisation est avantageuse en termes de rendement thermodynamique et de capacité de production, car on utilise alors avantageusement comme turbine à gaz une turbine de capacité maximale disponible sur le marché, c'est-à-dire 25-30MW dans le cas de turbines destinées à être installées sur un support flottant, plus un deuxième moteur électrique de 5 à 10 MW relié au deuxième compresseur, la puissance globale des deuxième moteur et troisième moteur (turbine à gaz) étant alors de 30 à 40MW, donc largement supérieure à celle des turbine à gaz les plus grosses disponibles sur le marché et destinées à des supports flottants. Avantageusement, le deuxième moteur peut être lui aussi une turbine à gaz, de préférence de puissance identique à la turbine à gaz principale, ce qui permet alors d'atteindre une puissance globale de 50 à 60MW.

En faisant varier la pression P2, le procédé selon l'invention permet de mettre en œuvre une énergie totale Ef minimale consommée dans le procédé inférieur à 21.5 kW x jour/t, plus particulièrement de 18.5 à 20.5 kW x jour/t de gaz liquéfié produit.

D'une manière générale, on fonctionnera avec une turbine à gaz GT à plein régime, que l'on complètera par un apport de puissance au niveau du premier moteur M1, ledit apport étant limité à moins de 30% de la puissance globale de manière à optimiser le rendement à la valeur minimale comprise entre 18.5 et 21.5 kW x jour/t, puis en cas de nécessité, on augmentera la puissance globale par injection de puissance au niveau du deuxième moteur M2, et concomitamment on réajustera la puissance injectée au niveau du premier moteur M1, de manière à ce que la dite puissance soit toujours sensiblement égale à moins de 30% de la puissance globale de manière à conserver le rendement de l'installation à la valeur optimale comprise entre 18.5 et 21.5 kW x jour/t.

Ledit rendement optimal de 19.75 kW x jour/t pour une puissance du premier moteur M1 représentant 24% de la puissance totale est valable pour un fluide réfrigérant constitué de 100% d'azote. Dans le cas de gaz réfrigérant autre tel que néon ou hydrogène_ou mélanges azote-néon ou azote-hydrogène, le rendement optimal ainsi que le pourcentage de puissance varient de 18.5 à 21.5 kW x jour/t en fonction du gaz réfrigérant ou mélange et des pourcentages de néon ou d'hydrogène, mais les avantages détaillés précédemment restent valables et même se cumulent.

Selon d'autres caractéristiques particulières :
- la composition du gaz à liquéfier est comprise dans les fourchettes suivantes pour un total de 100%:
- Méthane de 80 à 100%,
- azote de 0 à 20 %
- éthane de 0 à 20%
- propane de 0 à 20 %, et
- butane de 0 à 20 % ; et
- les températures suivantes :
- T0 et T0' sont de 10 à 35 °C (température en AA), et
- T3 et T3' sont de -160 à -170°C (température en DD), et
- T2 et T2' sont de -100 à - 140°C (température en CC), et
- T1 et T1' sont de -30 à -70°C (température en CC) ;

Pour les pressions suivantes :
- P0 est de 0.5 à 5 MPa (5 à 50 bars), et
- P1 est de 0.5 à 5 MPa, et
- P2 est de 1 à 10 MPa (10 à 100bars), et
- P3 est de 5 à 20 MPa (50 à 200bars).

D'autres caractéristiques et avantages de la présente invention apparaîtront à la lumière de la description détaillée de différents modes de réalisation qui va suivre, en référence aux figures suivantes.
- la figure 1 représente le diagramme d'un procédé standard de liquéfaction à double boucle utilisant l'azote comme gaz réfrigérant,

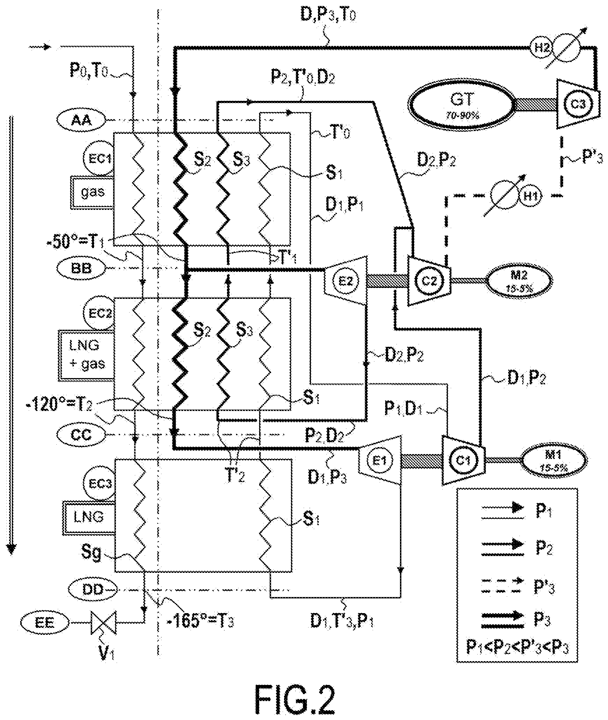

- la figure 2 représente le diagramme d'un procédé de liquéfaction selon l'invention à triple boucle utilisant un mélange binaire selon l'invention comportant de l'azote comme gaz réfrigérant, dans une version dite « équilibrée » en comparaison avec le même procédé utilisant l'azote comme gaz réfrigérant (un mode de réalisation qui n'est pas couvert par les revendications),

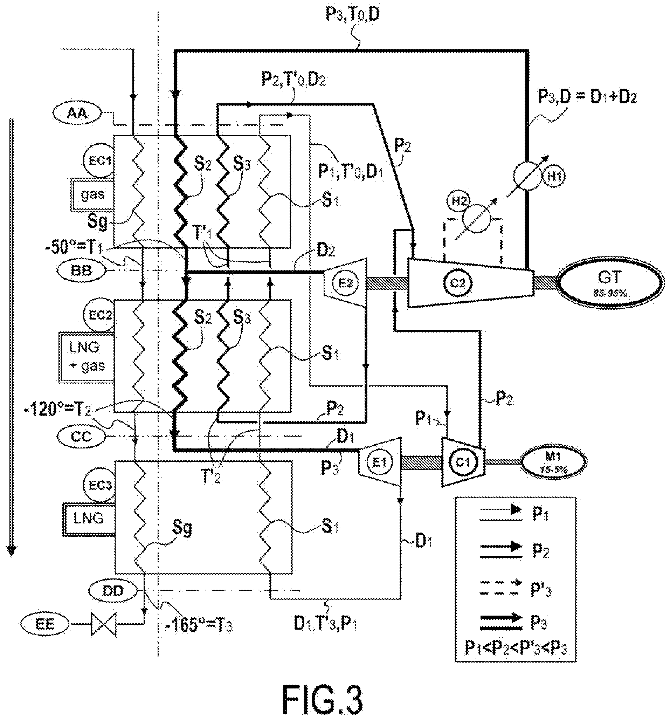

- la figure 3 représente le diagramme d'un procédé de liquéfaction selon l'invention à triple boucle utilisant un mélange binaire selon l'invention comportant de l'azote comme gaz réfrigérant, dans une version dite « compacte » en comparaison avec le même procédé utilisant l'azote comme gaz réfrigérant (un mode de réalisation qui n'est pas couvert par les revendications),

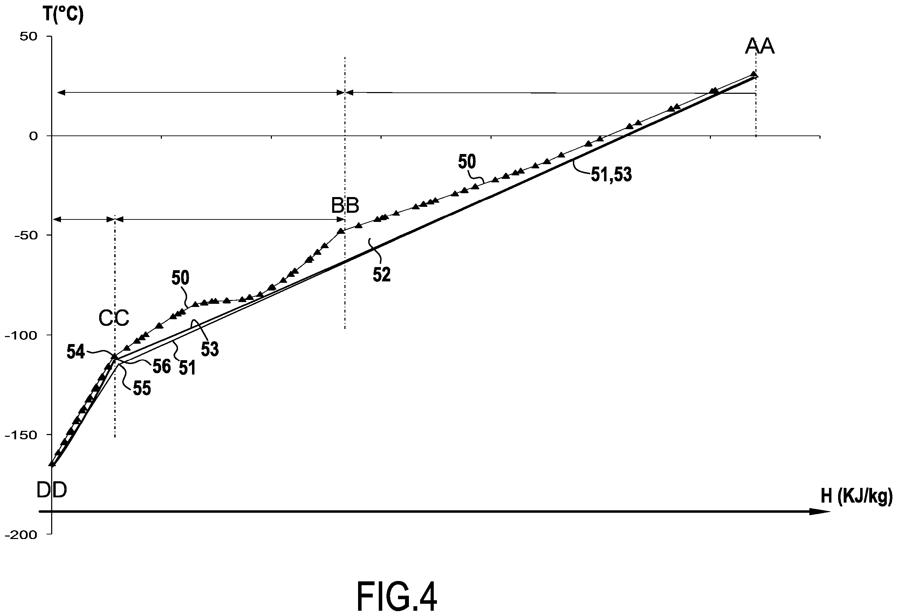

- la figure 4 représente un diagramme de refroidissement et de liquéfaction d'un gaz naturel dans le cadre d'un procédé de liquéfaction selon l'invention représentant l'enthalpie du gaz naturel et du fluide réfrigérant (kJ/kg) en fonction de la température de T0 à T3,

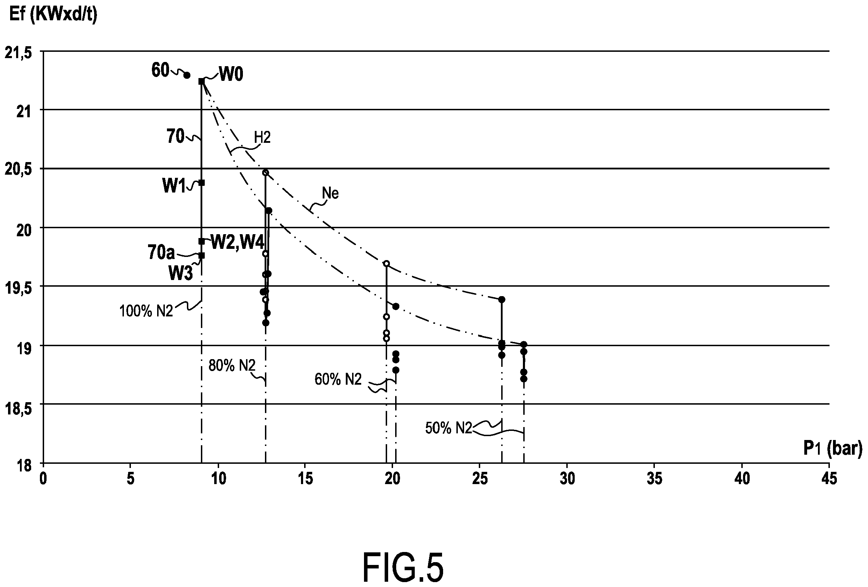

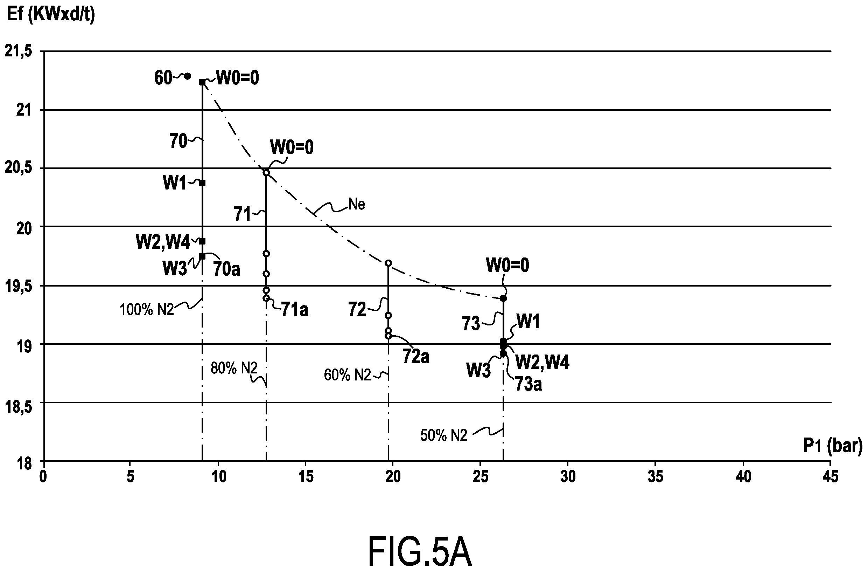

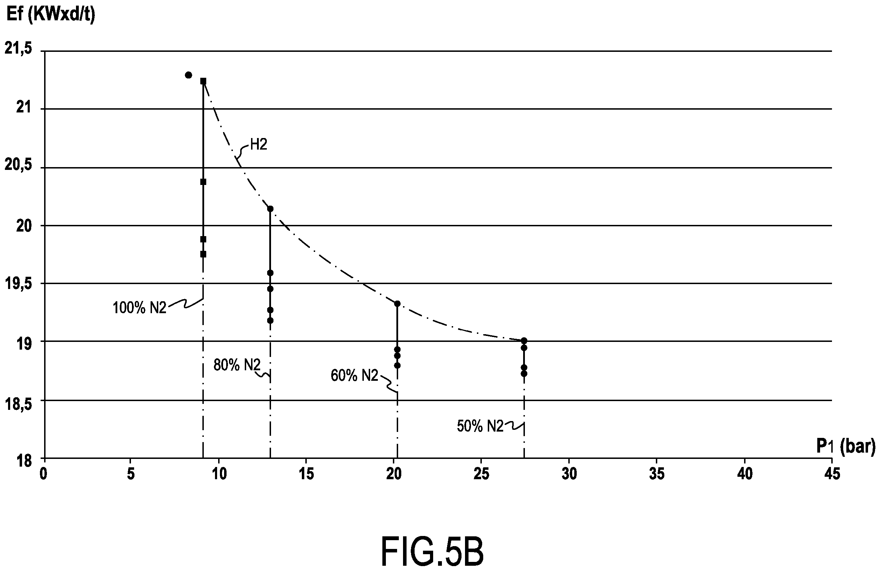

- les figures 5 et 5A représentent des diagrammes de l'énergie totale consommée (Ef) en kW x jour par tonne de GNL produit (kW x jour/t) d'un procédé de liquéfaction selon l'invention utilisant un mélange d'azote et de néon comme gaz réfrigérant, en fonction de la pression P1 et des divers pourcentages en néon dudit mélange,
- les figures 5 et 5B représentent des diagrammes l'énergie totale consommée (Ef) kW x jour/t de GNL produit d'un procédé de liquéfaction selon l'invention utilisant un mélange d'azote et d'hydrogène comme gaz réfrigérant, en fonction de la pression P1 et des divers pourcentages en hydrogène dudit mélange,
- la figure 6A représente un diagramme de l'énergie totale consommée (Ef) en kW x jour/t de GNL produit d'un procédé de liquéfaction selon l'invention utilisant un mélange d'azote et de néon comme gaz réfrigérant en fonction de la pression P2 et divers pourcentages en néon dudit mélange,
- la figure 6B représente des diagrammes de l'énergie totale consommée (Ef) en kW x jour/t de GNL produit d'un procédé de liquéfaction selon l'invention utilisant un mélange d'azote et d'hydrogène comme gaz réfrigérant, en fonction de la pression P2 et divers pourcentages en hydrogène dudit mélange,
- la figure 7 représente un diagramme de l'énergie totale consommée (Ef) en kW x jour/t de GNL produit de GNL produit dans un procédé de liquéfaction de la technique antérieure (60) et d'un autre procédé de liquéfaction à titre comparatif, utilisant de l'azote comme gaz réfrigérant selon le niveau de la pression P3 (un mode de réalisation qui n'est pas couvert par les revendications),
- la figure 7A représente un diagramme de l'énergie totale consommée (Ef) en kW x jour/t de GNL produit d'un procédé de liquéfaction selon l'invention utilisant un mélange d'azote et de néon comme gaz réfrigérant en fonction de la pression P3 et divers pourcentages en néon dudit mélange,
- la figure 7B représente un diagramme de l'énergie totale consommée (Ef) en kW x jour/t de GNL produit d'un procédé de liquéfaction selon l'invention utilisant un mélange d'azote et d'hydrogène comme gaz réfrigérant en fonction de la pression P3 et divers pourcentages en hydrogène dudit mélange.

Sur la figure 1 on a représenté le PFD *(Process Flow Diagram),* c'est à dire le diagramme des flux du procédé standard à double boucle sans changement de phase utilisant de l'azote comme gaz réfrigérant. Le procédé comporte des compresseurs C1, C2 et C3, des détendeurs E1 et E2, des refroidisseurs intermédiaires H1 et H2 ainsi que des échangeurs cryogéniques EC1, EC2 et EC3. Les échangeurs de chaleur sont constitués, de manière connue, d'au moins deux circuits de fluides juxtaposés mais ne communiquant pas entre eux au niveau desdits fluides, les fluides circulant dans lesdits circuits échangeant de la chaleur tout au long du parcours au sein dudit échangeur thermique. De nombreux types d'échangeurs thermiques ont été développés pour les diverses industries et dans le cadre des échangeurs cryogéniques deux types prédominent de manière connue : d'une part les échangeurs bobinés, d'autre part les échangeurs à plaque aluminium dites « brasées » appelés en anglais « cold box ».

Des échangeurs de ce type sont connus de l'homme de l'Art et commercialisés par les sociétés LINDE (France) ou FIVE Cryogénie (France). Ainsi, tous les circuits d'un échangeur cryogénique sont en contact thermique les uns avec les autres pour échanger des calories, mais les fluides qui y circulent ne se mélangent pas. Chacun des circuits est dimensionné pour présenter un minimum de pertes de charges au débit maximal de fluide réfrigérant et une résistance suffisante pour résister à la pression dudit fluide réfrigérant existant dans la boucle concernée.

De manière conventionnelle, un détendeur réalise une chute de pression d'un fluide ou d'un gaz et est représenté par un trapèze symétrique, dont la petite base représente l'entrée 10a (haute pression), et la grande base représente la sortie 10b (basse pression) comme illustré sur la figure 1 en référence au détendeur E2, ledit détendeur pouvant être une simple réduction du diamètre de la conduite, ou encore une vanne ajustable, mais dans le cas du procédé de liquéfaction selon l'invention le détendeur est en général une turbine destinée à récupérer de l'énergie mécanique lors de la dite détente, pour que cette énergie ne soit pas perdue.

De la même manière, et de manière conventionnelle, un compresseur augmente la pression d'un gaz et est représenté par un trapèze symétrique, dont la grande base représente l'entrée 11a (basse pression), et la petite base représente la sortie 11b (haute pression) comme illustré sur la figure 1 en référence au compresseur C2, ledit compresseur étant en général une turbine ou un compresseur à pistons, ou encore un compresseur à spirale. Selon l'invention, de préférence (figure 2 et 3) les compresseurs C1 et C2 sont reliés mécaniquement à un moteur M1 et M2 qui peut être soit à un moteur thermique, soit à un moteur électrique, ou toute autre installation capable de fournir de l'énergie mécanique.

Le gaz naturel circule dans le circuit Sg et entre en AA dans le premier échangeur cryogénique EC1 à une température T0, supérieure ou sensiblement égale à la température ambiante, et T1=-50°C environ. Dans cet échangeur EC1, le gaz naturel se refroidit, mais reste à l'état de gaz. Puis il passe en BB dans l'échangeur cryogénique EC2 dont la température est comprise entre T1=-50°C environ et T2=-120°C environ.

Dans cet échangeur EC2, la totalité du gaz naturel se liquéfie en GNL à une température de T2=-120°C environ, puis le GNL passe en CC dans l'échangeur cryogénique EC3. Dans cet échangeur EC3, le GNL est refroidi jusqu'à la température de T3=-165°C ce qui permet d'évacuer le GNL en partie basse en DD, puis de le dépressuriser en EE pour enfin le stocker liquide à la pression atmosphérique ambiante, c'est à dire à une pression absolue de 1 bar environ (soit environ 0.1MPa). Tout au long de ce parcours du gaz naturel dans le circuit Sg dans les divers échangeurs, le gaz naturel se refroidit en cédant des calories au gaz réfrigérant, lequel se réchauffe alors et doit subir de manière permanente un cycle thermodynamique complet pour pouvoir extraire de manière continue des calories au gaz naturel entrant en AA.

Ainsi, le parcours du gaz naturel est représenté sur la gauche du PFD, et ledit gaz circule du haut vers le bas dans le circuit Sg, la température étant décroissante du haut vers le bas, depuis une température T0 sensiblement ambiante en haut en AA, jusqu'à une température T3 d'environ -165°C en bas en DD.

Sur la partie droite du PFD, on a représenté le cycle thermodynamique du gaz réfrigérant à double boucle correspondant aux circuits S1 et S2. Pour la clarté des explications, les niveaux de pression dans les principaux circuits sont représentés en trait fin pour la basse pression (P1 dans le circuit S1), en trait moyen pour la pression intermédiaire (P2), et en trait fort pour la haute pression (P3 dans le circuit S2).

Dans un schéma classique représenté sur la figure 1, les phases 1, 2 et 3 sont réalisées par une boucle basse pression P1 à très basse température à l'entrée inférieure d'EC3.

L'installation est composé de :
- un moteur, en général une turbine à gaz GT qui actionne le compresseur C3 et fournit l'intégralité de la puissance mécanique,
- de 3 compresseurs :
   - C3 qui comprime l'intégralité du flux de réfrigérant,
   - C2 qui est accouplé à la turbine E2 et qui comprime la portion D'2 du flux total D, et
   - C1 qui est accouplé à la turbine E1 et qui comprime la portion complémentaire D'1 du flux total D,
- de 2 turbines,
   - E2 couplé en direct sur le compresseur C2, et qui détend la portion D2 du flux total D, depuis la haute pression P3 jusqu'à la basse pression P1,
   - E1 couplé en direct sur le compresseur C1, et qui détend la portion D1 du flux total D, depuis la haute pression P3 jusqu'à la basse pression P1,
- d'un échangeur cryogénique en trois parties ou 3 échangeurs en série EC1, EC2 et EC3, correspondant respectivement aux phase 1, phase 2 et phase 3 de la liquéfaction, comportant trois circuits, respectivement SG (gaz naturel) et S1-S2 (gaz réfrigérant),
- de deux refroidisseurs au minimum, H1 et H2, situés respectivement en sortie du compresseur principal C3 (H1) et sur la boucle haute pression (H2), avant l'entrée dans les échangeurs cryogéniques.

Un refroidisseur H1, H2 peut être constitué d'un échangeur à eau, par exemple un échangeur à eau de mer ou de rivière ou air froid du type ventilo convecteur ou tour de refroidissement, telle que celles utilisées dans les centrales nucléaires.

Plus précisément sur la figure 1, on a représenté le schéma d'un procédé et installation dans lesquels on liquéfie le dit gaz naturel à liquéfier en réalisant les étapes concomitantes suivantes de :
(a) circulation dudit gaz naturel à liquéfier circulant Sg à une pression P0 supérieure ou égale à la pression atmosphérique ( Patm), de préférence P0 étant supérieure à la pression atmosphérique, dans 3 échangeurs de chaleur cryogéniques EC1, EC2, et EC3 disposés en série dont :
   - un premier échangeur EC1 dans lequel le dit gaz naturel entrant à une température T0 est refroidi et sort BB à une température T1 inférieure à T0 à laquelle tous les composants dudit gaz naturel sont encore à l'état gazeux, puis
   - un deuxième échangeur EC2 dans lequel le gaz naturel est entièrement liquéfié et sort en CC à une température T2 inférieure à T1, et
   - un troisième échangeur EC3 dans lequel ledit gaz naturel liquéfié est refroidi de T2 à T3, T3 étant inférieure à T2 et T3 étant inférieure ou égale à la température de liquéfaction dudit gaz naturel à pression atmosphérique, et
(b) circulation en circuit fermé à contre-courant d'un premier flux S1 de gaz réfrigérant à l'état gazeux comprimé à une pression P1 inférieure à P3 en contact indirect avec et à contre-courant du flux de gaz naturel Sg, ledit premier flux S1 à une pression P1 traversant les 3 échangeurs EC3, EC2, et EC1 entrant en DD dans le dit troisième échangeur EC3 à une température T3' inférieure à T3 puis sortant dudit troisième échangeur et entrant dans le dit deuxième échangeur EC2 en CC à une température T2' inférieure à T2, puis sortant du deuxième échangeur et entrant dans le premier échangeur EC1 en BB à une température T1' inférieure à T1 et sortant en AA dudit premier échangeur EC1 à une température T0' inférieure ou égale à T0,
   - le dit premier flux S1 de gaz réfrigérant à P1 et T3' étant obtenu par détente dans un premier détendeur E1 d'une première partie D1 d'un deuxième flux S2 de gaz réfrigérant comprimé à P3 supérieure à P1 circulant à co-courant dudit gaz naturel entrant en AA dans ledit premier échangeur EC1 à T0 et sortant CC dudit deuxième échangeur EC2 sensiblement à T2, et
   - une deuxième partie D2 dudit deuxième flux S2 de gaz réfrigérant comprimé P3 circulant à co-courant dudit gaz naturel entrant en AA dans ledit premier échangeur EC1 à T0 et sortant dudit premier échangeur sensiblement à T1 est détendue dans un deuxième détendeur E2 à la dite pression P1 et à une dite température T2', et est recyclée pour rejoindre ledit premier flux à
   l'entrée en CC dudit deuxième échangeur, et
(c) le dit deuxième flux S2 comprimé à P3 est obtenu par compression par trois compresseurs C1, C2, et C3 suivi d'au moins deux refroidissements H1 et H2 dudit premier flux S1 de gaz réfrigérant recyclé sortant en AA du dit premier échangeur EC1, par un premier compresseur C1 couplé audit premier détendeur E1, et
(d) après l'étape (a) on dépressurise le gaz naturel liquéfié depuis la pression P0 à la pression atmosphérique.

Plus précisément, sur la figure 1, on met en œuvre 3 compresseurs dont 2 premier et deuxième compresseurs disposés en parallèle comprenant :
- un troisième compresseur C3 actionné par un moteur de préférence une turbine à gaz GT pour comprimer de P1 à P'3, P'3 étant compris entre P1 et P3, la totalité dudit premier flux de gaz réfrigérant provenant de la sortie AA dudit premier échangeur EC1, et
- un premier compresseur C1 couplé au premier détendeur E1 consistant en une turbine, pour comprimer de P'3 à P3, une partie D1' du dit premier flux de gaz réfrigérant, comprimé par le troisième compresseur C3, et
- un deuxième compresseur C2 couplé au deuxième détendeur E2 consistant en une turbine, pour comprimer de P'3 à P3 une partie D2' dudit premier flux de gaz réfrigérant comprimé par le troisième compresseur C3.

Dans la figure 1, C1 et C2 sont donc disposés en parallèle et opèrent entre la moyenne pression P'3 et la haute pression P3 sur la totalité du flux en provenance de C3.

Le gaz réfrigérant en sortie haute en AA du circuit S1, au niveau de l'échangeur EC1 a un débit D : il est à la basse pression P1 et à une température T0' sensiblement inférieure à T0 et à la température ambiante. Il est alors comprimé en C3 à la pression P'3 puis passe à travers un refroidisseur H1. Le fluide de débit D est alors séparé en deux partie de débits D1' et D2' qui alimentent respectivement les compresseurs C1 (D1') et C2 (D2') opérant en parallèle. Les deux flux à la pression P3 sont ensuite rassemblés puis refroidis sensiblement jusqu'à la température ambiante T0 en passant dans le refroidisseur H2. Ce flux global D entre alors dans le haut de l'échangeur cryogénique EC1 au niveau du circuit S2, puis à la sortie du premier niveau, en BB, un large partie du flux de débit D2 (D2 supérieure à D1) est extraite et dirigée vers la turbine E2 couplée au compresseur C2. Le reste du flux D1 traverse le deuxième étage de l'échangeur cryogénique EC2, puis au niveau CC est dirigé vers la turbine E1 couplée au compresseur C1.

A la sortie de la turbine E1 le gaz réfrigérant, à une température T3' inférieure à T3=-165°C, est alors dirigé vers le bas de l'échangeur cryogénique EC3 dans le circuit S1 et remonte à contre-courant du gaz à liquéfier circulant dans le circuit Sg, dont il assure la phase finale 3 de la liquéfaction.

Le flux D2 de gaz réfrigérant en provenance de la turbine E2 est à une pression P1 et température T2 d'environ -120°C et est recombiné au sein du circuit S1 au flux D1 en provenance de la turbine E1 au niveau de la sortie supérieure de l'échangeur cryogénique EC3 en CC.

La séparation du deuxième flux S2 en deux parties de débits différents D1 et D2 en sortie BB du premier échangeur, de préférence avec D2 supérieur à D1, est avantageuse car l'essentiel de l'énergie consommée se produit dans la phase 2 au sein du deuxième échangeur EC2. Ainsi seule une partie mineure de débit D1 traverse le troisième échangeur EC3 où se produit la phase 3, tandis que le flux total D=D1+D2 du circuit S1 traverse alors l'échangeur cryogénique EC2 pour assurer la phase 2 de la liquéfaction (température deT1=-50°C à T2=-120°C).

Le même flux D du circuit S1 traverse enfin l'échangeur cryogénique EC1 pour assurer la phase 1 du processus de liquéfaction (température de T1=-50°C à T0=température ambiante). A la sortie supérieure de l'échangeur cryogénique EC1, le flux D du circuit S1 est à la température T0' sensiblement inférieure à la température ambiante. Puis, le flux D est de nouveau dirigé vers le compresseur C3 pour effectuer de manière continue un nouveau cycle.

Dans cette configuration, les compresseurs C1 et C2 fonctionnent en parallèle et doivent assurer le plus haut niveau de pression du cycle. Les deux compresseurs C1 et C2 traitent des débits de fluide réfrigérant différents, respectivement D1' et D2', et sont accouplés directement aux turbines E1 et E2 lesquelles elles aussi traitent des débits différents, respectivement D1 et D2.

On a la relation :
D1 + D2 = D = D'1 + D'2, avec D1 différent de D'1 et D2 différent de D'2. En pratique, de préférence D1/D= 5 à 35%, de préférence de 10 à 25%.

Ainsi, dans ce type d'installation, l'intégralité de la puissance est injectée dans le système au niveau du compresseur C3 ( par la turbine à gaz GT), les transferts de puissance au niveau des couples turbine compresseur E2-C2 et E1-C1 étant variables en fonction des pressions dans les divers circuits (P1-P2-P3), des niveaux de température à l'entrée des échangeurs cryogéniques, ainsi que des transferts thermiques au sein de chacun de ces dits échangeurs cryogéniques.

Ainsi, une telle installation présente un point de fonctionnement qui s'auto-stabilise à un niveau d'énergie de consommation donnée Ef exprimé en général en kW x jour/t c'est à dire en kW-jour par tonne de GNL produit, ou encore en kWh par kg de GNL produit, ledit point de fonctionnement pouvant le cas échéant être totalement instable. Il est alors très difficile de piloter les pressions des boucles haute et basse indépendamment l'une de l'autre. Cela peut se révéler nécessaire dans le cas de variations de composition du gaz naturel à liquéfier. Il est possible de modifier les flux en contraignant localement tout ou partie des flux D1-D'1-D2-D'1, par exemple en créant des pertes de charge localisées, mais de telles dispositions conduisent à des pertes d'énergie, donc à une baisse du rendement global de l'installation de liquéfaction.

Le diagramme de la figure 4 illustre la variation d'enthalpie H, exprimé en kJ/ kg de GNL produit, dans un procédé de liquéfaction de gaz naturel. Ce diagramme de la figure 4 est le résultat d'un calcul théorique relatif à un gaz naturel comportant majoritairement du méthane (85%), le complément (15%) étant constitué d'azote, d'éthane (C-2), de propane (C-3) et de butane (C-4).

On y a représenté :
- la phase 1 de refroidissement du gaz naturel entre les points AA et BB correspondant à l'étage EC1 du PFD de la figure 1, correspondant à des températures comprises entre la température ambiante T0 et T1=-50°C,
- la phase 2 de liquéfaction du gaz naturel entre les points BB et CC, correspondant à l'étage EC2 du PFD de la figure 1, correspondant à des températures comprises entre T1=-50°C et T2=-120°C,
- la phase 3 de refroidissement du GNL entre les points CC et DD, correspondant à l'étage EC3 du PFD de la figure 1, correspondant à des températures comprises entre T2=-120°C et T3=-165°C.

La courbe 50 comportant des triangles, illustre les variations de l'enthalpie H des fluides circulant à co-courant dans les circuits Sg et S2 en fonction de la température du gaz à liquéfier comportant le méthane/GNL pour un procédé virtuel idéal.

La courbe 51 correspond à la variation de l'enthalpie H du gaz réfrigérant circulant dans le circuit S1 de la figure 1, donc représente l'énergie transférée aux circuits Sg et S2 lors du procédé de liquéfaction.

La surface 52 comprise entre les deux courbes 50 et 51 représente la perte d'énergie globale consommée Ef dans le procédé de liquéfaction : - on cherche donc à minimiser cette surface de manière à obtenir le meilleur rendement. Dans les procédé à terre utilisant des procédés à changement de phase du fluide réfrigérant, la courbe 51 n'est plus rectiligne, mais se rapproche beaucoup plus de la courbe théorique 50, ce qui implique moins de pertes, donc un rendement amélioré, mais le procédé à changement de phase du fluide réfrigérant n'est pas adapté à la liquéfaction à bord d'un support flottant en environnement confiné.

Les figures 2 et 3 illustrent le diagramme PFD du procédé amélioré selon l'invention, dans lequel le cheminement du gaz naturel à liquéfier comprenant majoritairement du méthane et de traces d'autres gaz, est identique à celui de la figure 1, et s'effectue de la même manière au sein du circuit Sg, du haut (température T0 sensiblement ambiante) vers le bas (état liquide à T3=-165°C), à travers trois échangeurs cryogéniques EC1, EC2 et EC3.

Sur les figures 2 et 3, plutôt que de recycler après détente une partie D2 du deuxième flux en sortie du premier échangeur pour rejoindre le premier flux à l'entrée basse CC du deuxième échangeur comme dans la figure 1, on recycle cette partie D2 du deuxième flux à l'entrée CC du deuxième échangeur à une pression intermédiaire P2 supérieure à P1 dans un troisième circuit S3 indépendant de S1, S2, SG, et parallèle à S1, c'est à dire à co-courant de S1.

Du fait que l'essentiel de l'énergie est consommée pour la phase 2 du procédé au sein dudit deuxième échangeur, ceci permet d'augmenter encore les transferts thermiques et le rendement énergétique global du procédé. Mais de façon plus importante, on permet en outre de moduler et contrôler spécifiquement la valeur de la pression P2 en montant en série les deux compresseurs C1 et C2 et en couplant C1 avec un moteur M1 permettant de moduler et contrôler la puissance supplémentaire apportée à C1 déjà couplé à la turbine E1, et donc de contrôler la valeur de la pression P2 comme décrit ci-après.

Plus précisément, sur les figures 2 et 3, on a représenté des procédé et installation dans lesquelles on liquéfie le dit gaz naturel à liquéfier en réalisant les étapes concomitantes suivantes de :
(a) circulation dudit gaz naturel à liquéfier circulant Sg à une pression P0 supérieure ou égale à la pression atmosphérique (Patm), P0 étant supérieure à la pression atmosphérique, dans 3 échangeurs de chaleur cryogéniques EC1, EC2, et EC3 disposés en série dont :
   - un premier échangeur EC1 dans lequel le dit gaz naturel entrant à une température T0 est refroidit et sort en BB à une température T1 inférieure à T0, température T1 à laquelle tous les composants du gaz naturel sont encore à l'état gazeux, puis
   - un deuxième échangeur EC2 dans lequel le gaz naturel est entièrement liquéfié et sort en CC à une température T2 inférieure à T1, et
   - un troisième échangeur EC3 dans lequel ledit gaz naturel liquéfié est refroidit de T2 à T3, T3 étant inférieure à T2 et T3 étant inférieure à la température de liquéfaction dudit gaz naturel à pression atmosphérique, et
(b) circulation à circuit fermé de deux flux S1 et S3 de gaz réfrigérant à l'état gazeux dénommés respectivement premier et troisième flux, respectivement à des pressions différentes P1 (S1) et P2 (S2), traversant deux dits échangeurs en contact indirect avec et à contre-courant du flux de gaz naturel Sg, comprenant :
   - un premier flux de gaz réfrigérant S1 à une pression P1 inférieure à P3 traversant les 3 échangeurs EC1, EC2 et EC3 entrant en DD dans le dit troisième échangeur EC3 à une température T3' inférieure à T3 puis sortant dudit troisième échangeur et entrant dans le dit deuxième échangeur EC2 en CC à une température T2' inférieure à T2, puis sortant du deuxième échangeur et entrant dans le premier échangeur EC1 en BB à une température T1' inférieure à T1 et sortant en AA dudit premier échangeur à une température T0' inférieure à T0, le dit premier flux de gaz réfrigérant à P1 et T3' étant obtenu par détente dans un premier détendeur E1 d'une partie D1 d'un deuxième flux S2 de gaz réfrigérant comprimé à la pression P3 supérieure à P2, ledit deuxième flux S2 circulant en contact indirect avec et à co-courant dudit flux gaz naturel Sg en entrant en AA dans ledit premier échangeur EC1 sensiblement à T0 et sortant en CC dudit deuxième échangeur EC) sensiblement à la température T2, et
   - un troisième flux S3 à une pression P2 supérieure à P1 et inférieure à P3 circulant en contact indirect avec et à co-courant dudit premier flux, traversant uniquement les dits deuxième et premier échangeurs EC2 et EC1, entrant en CC dans ledit deuxième échangeur sensiblement à une température T2' inférieure à T2 et sortant en AA dudit premier échangeur EC sensiblement à une température T0', le dit troisième flux S3 de gaz réfrigérant à P2 et T2 étant obtenu par détente dans un deuxième détendeur E2 d'une partie D2 dudit deuxième flux S2 de gaz réfrigérant sortant dudit premier échangeur sensiblement à T1,
(c) le dit deuxième flux de gaz réfrigérant S2 comprimé à la pression P3 étant obtenu par compression desdits premier et troisième flux de gaz réfrigérant sortant en AA du dit premier échangeur EC1 à P1 et respectivement P2, par deux premier et deuxième compresseurs, respectivement C1 et C2 disposés en série et couplés respectivement auxdits premier et deuxième détendeurs E1 et E2 consistant en des turbines, et
(d) après l'étape (a) on dépressurise le gaz naturel liquéfié sortant en DD dudit troisième échangeur à T3, depuis la pression P0 à la pression atmosphérique le cas échéant.

Plus précisément, sur la figure 2, on met en œuvre :
(1) trois compresseurs C1, C2 et C3 montés en série, comprenant :
   (i) un premier compresseur C1 couplé audit premier détendeur E1, comprimant de P1 à P2 la totalité du dit premier flux de gaz réfrigérant sortant en AA dudit premier échangeur EC1, et
   (ii) un deuxième compresseur C2 couplé audit deuxième détendeur E2, comprimant de P2 à P'3, P'3 étant supérieure à P2 et inférieure ou égal à P3, d'une part le dit troisième flux S3 de gaz réfrigérant sortant à P2 du dit premier échangeur EC1, et d'autre part le dit premier flux de gaz réfrigérant comprimé à P2 sortant dudit premier compresseur C1, et
   (iii) un troisième compresseur C3 actionné par une turbine à gaz GT pour fournir la majeure partie de l'énergie et comprimer de P'3 à P3 la totalité des premier et troisième flux de gaz réfrigérant comprimés par le deuxième compresseur C2, pour obtenir le dit deuxième flux de gaz réfrigérant à P3 et T0 après refroidissement (H1, H2), et
(2) le dit premier compresseur C1 est couplé à un premier moteur M1, permettant de faire varier de façon contrôlée la pression P2 en apportant de la puissance de façon contrôlée audit premier compresseur C1, ledit premier moteur M1 apportant au moins 3%, de préférence encore de 3 à 30% de la puissance totale apportée à l'ensemble des dits compresseurs mis en œuvre C1, C2 et C3, la turbine à gaz GT couplée au dit troisième compresseur C3, ainsi que le deuxième moteur M2 couplé au deuxième compresseur C2 fournissant ensemble de 97 à 70% de la puissance totale apportée à l'ensemble des dits compresseurs mis en œuvre C1, C2 et C3.

L'installation de la figure 2 est donc composé de :
- une pluralité de moteurs, en général une turbine à gaz GT qui actionne le compresseur C3 et des moteurs M1-M2, par exemple soit électriques soit thermiques, tels des turbines à gaz, connectés respectivement aux compresseurs C1-C2,
- 3 compresseurs :
   - C3 qui comprime l'intégralité du flux de gaz réfrigérant D,
   - C2 qui est accouplé au moteur M2 et à la turbine E2, et qui comprime l'intégralité du flux de gaz réfrigérant D,
   - C1 qui est accouplé au moteur M1 et à la turbine E1, et qui comprime la portion D1 de premier flux de gaz réfrigérant,
- 2 détendeurs, par exemple des turbines,
   - E2 couplé au compresseur C2 et au moteur M2,
   - E1 couplé au compresseur C1 et au moteur M1,
- d'un échangeur cryogénique en trois parties ou 3 échangeurs en série EC1, EC2 et EC3, correspondant respectivement aux phases 1, 2 et 3 de la liquéfaction et comportant quatre circuits, respectivement SG (gaz naturel) et S1-S2-S3 (gaz réfrigérant),
- de deux refroidisseurs, H1 et H2, situés respectivement en sortie du compresseur principal C3 (H2) avant l'entrée dans le circuit S2 des échangeurs cryogéniques, et sur la boucle haute pression intermédiaire P3' (H1).

Les compresseurs C1 et C2 sont montés en série.
- C1 opère entre la basse pression P1 et la moyenne pression P2, sur la portion D1 du flux de gaz réfrigérant en provenance de la turbine E1 circulant dans le circuit S1, du bas vers le haut, à travers chacun des trois échangeurs cryogéniques EC3-EC2-EC1.
- C2 opère entre la moyenne pression P2 et la haute pression intermédiaire P'3 sur l'intégralité du flux D, composé de la portion D1 de flux en provenance du compresseur C1 et de la portion D2 du flux de gaz réfrigérant en provenance de la turbine E2 circulant dans le circuit S3, du bas vers le haut, à travers chacun des deux échangeurs cryogéniques EC2-EC1.

L'intégralité du flux de gaz réfrigérant D sortant du compresseur C2 est refroidie dans un refroidisseur H1 avant de rentrer à la pression P'3 dans le compresseur C3, ce dernier étant connecté à un moteur (GT), en général une turbine à gaz. La dite turbine à gaz ainsi que le moteur (M2) fournissent ensemble au gaz réfrigérant de 70 à 97% de la puissance globale Q, le reliquat de puissance étant fourni au système au niveau du moteur M1, à savoir de 30 à 3% de la puissance globale Q.

En sortie du compresseur C3, l'intégralité du flux de gaz réfrigérant D est à la haute pression P3. Le flux est alors refroidi dans un refroidisseur H2 avant de circuler dans le circuit S2, du haut vers le bas, à travers chacun des deux échangeurs cryogéniques EC1-EC2.

La portion D2 de flux de gaz réfrigérant est prélevée en BB à la sortie de l'échangeur cryogénique EC1 et dirigé vers l'entrée de la turbine E2, le complément, c'est à dire la portion D1 de flux de gaz réfrigérant étant prélevée en CC à la sortie de l'échangeur cryogénique EC2 et dirigé vers l'entrée de la turbine E1.

Au sein du compresseur C3, on installe entre deux étages de compression un refroidisseur H2 fonctionnant à la pression P3, ledit refroidisseur H2 traitant l'intégralité du flux D.

Dans ce procédé selon l'invention, on a les relations :
D1 + D2 = D et de préférence D1/D2=1/3 à 1/20, de préférence de 1/4 à 1/10.

Le principal avantage du dispositif selon l'invention de la figure 2 réside dans la possibilité d'optimiser le rendement global des installations et de modifier à loisir les points de fonctionnement des diverses boucles correspondant aux circuits S1-S2-S3, c'est-à-dire de minimiser l'énergie consommée en augmentant ou diminuant la puissance injectée au niveau de l'un des compresseurs C1-C2-C3, ou en faisant varier la répartition de la puissance globale Q injectée dans le système. Ces ajustements de puissance injectées au niveau des divers compresseurs C1-C2-C3 ont pour effet de modifier les débits dans les diverses boucles, donc de modifier les pressions P1, P2 & P3 ainsi que les débits massiques D, D1 et D2 dans les divers circuits S1-S2-S3, ce qui donne une grande souplesse dans l'optimisation du point de fonctionnement de l'installation et donc une grande facilité et une grande rapidité lors de réajustements du procédé suite à des fluctuations dans la composition du gaz naturel à liquéfier en provenance des réservoirs souterrains. Ces variations peuvent être importantes durant la vie du champ de production de gaz, qui peut s'étendre sur 20 à 30 ans, voire plus.

Ainsi, dans le diagramme de la figure 4 relatif à un gaz naturel comportant 85% de méthane, le complément étant constitué d'azote, d'éthane (C-2), de propane (C-3) et de butane (C-4), la courbe 50 comportant des triangles, illustre les variations de l'enthalpie H des fluides circulant dans les circuits Sg et S2 de la figure 2 en fonction de la température du gaz naturel/GNL pour un processus virtuel idéal.

La courbe 53 correspond à la variation de l'enthalpie H du fluide réfrigérant circulant dans les circuits S1 et S3 de la figure 2, donc représente l'énergie transférée lors du processus de liquéfaction aux circuits Sg et S2 de la figure 2.

La surface 52 comprise entre les deux courbes 50 et 53 représente la perte d'énergie globale dans le processus de liquéfaction en référence à la figure 2 : - on cherche donc à minimiser cette surface de manière à obtenir le meilleur rendement.

Lors des variations dans le temps de la qualité du gaz naturel fourni par le champ de gaz, donc de sa composition, le point bas 54 de la courbe 50 correspondant à P0 et T2 de fin de liquéfaction du GNL, peut varier de quelques %. Dans le processus conventionnel de la figure 1, le point correspondant 55 du circuit de gaz réfrigérant reste sensiblement fixe, et la surface 52, donc le rendement de l'installation ne peut pas être optimisé.

Par contre, dans le dispositif selon l'invention selon la figure 2, en jouant sur la répartition de l'énergie mécanique et en particulier sur l'énergie injectée en GT, en M1 et M2, et plus particulièrement en M1, on peut faire varier avantageusement la position du point 56, que l'on sait ainsi déplacer de manière optimale dans la direction du point 54, ce qui permet de réduire au minimum la surface de l'aire 52 comprise entre les courbes 50 et 53, et de ce fait d'optimiser en temps réel le rendement de l'installation de liquéfaction, en fonction de la composition du gaz naturel.

La figure 3 représente le diagramme PFD d'une version de l'invention présentant une compacité améliorée par rapport aux procédés et installation de la figure 2, dans laquelle le compresseur C2 est intégré sur la même ligne d'arbre que le compresseur C3 et est actionné par la turbine à gaz GT représentant un apport d'énergie mécanique de 85 à 95% de l'énergie totale Q. Dans cette configuration, la turbine d'expansion E2 se trouve alors connectée d'une part au compresseur C2 et d'autre part à la turbine à gaz GT.

Dans cette version de la figure 3 présentant une plus grande compacité que la version décrite en référence à la figure 2, on dispose toutefois de moins de latitude pour ajuster les points de fonctionnement des diverses boucles, car les ajustements de puissance ne peuvent alors se faire qu'au niveau des moteurs GT relié à C3 et M1 relié à C1. Ainsi, cette version compacte se justifie avantageusement en cas de surface disponible très limitée, et de plus on n'a que deux lignes d'arbres de machines tournante et deux compresseurs, alors que dans la version en référence à la figure 2, on doit installer trois lignes d'arbres de machines tournante et trois compresseurs, ce qui représente un surcoût non négligeable, mais apporte un plus grande flexibilité dans le réglage fin des diverses boucle de pression, ainsi qu'un meilleur rendement final, donc une meilleure rentabilité des installation sur le long terme, pendant toute la durée de vie des installation qui dépasse 20 à 30 ans, voire plus.

Sur les figures 5 à 9 discutées ci-après, on a reproduit les résultats des essais dans lesquelles on fait varier les valeurs de P1, P2 et P3 pour minimiser l'énergie totale consommée Ef en kW x jour/t en fonction de la variation de la composition du gaz réfrigérant.

Sur les figures 5-5A-5B, on a représenté le diagramme du rendement énergétique, plus précisément de Ef exprimé en kW x jour/t, en fonction de la pression P1, et en fonction des diverses variantes de l'invention. En fait, cette pression P1 est constante pour une composition de gaz réfrigérant donnée, ce qui explique que tous les points d'une même courbe sont sur une droite parallèle aux ordonnées. Cette pression P1 correspond à la température T3' la plus basse du dispositif, c'est à dire à la température à l'entrée basse de l'échangeur cryogénique EC3. Cette pression P1 correspond sensiblement au point de rosée du gaz réfrigérant à une température T3' sensiblement inférieure à T3=-165°C, c'est à dire la température à laquelle le GNL restera liquide sous une pression correspondant à la pression atmosphérique, soit sensiblement 0.1MPa absolue, c'est à dire sensiblement une atmosphère.

Sur les figures 5, 5A et 5B, on observe qu'en mélangeant l'azote à du néon ou de l'hydrogène, jusqu'à une proportion molaire de 50%, on peut augmenter la pression P1, ce qui s'accompagne d'une diminution de l'énergie optimale consommée au point de fonctionnement stabilisé, donc d'un meilleur rendement énergétique du procédé de liquéfaction.

D'autre part, sur le diagramme 5A relatif à un mélange azote-néon, le point de fonctionnement dans le cas du procédé conventionnel de la figure 1 avec de l'azote pur se situe en 60. La courbe 70 (portion de gauche) représente la variation du rendement énergétique en fonction de la puissance injectée dans le procédé au niveau du moteur M1 en référence aux figures 2 et 3. Le point supérieur W0=0 de la courbe 70 correspond à un moteur M1 non alimenté, donc fournissant une puissance nulle. Le point W1 correspond à une puissance W1>0 fournie par ledit moteur M1. De même les points successifs de la courbe correspondent à des puissances croissantes fournies au système au niveau du moteur M1, à savoir W4>W3>W2>W1>W0=0.

Les points W0 à W4 correspondent à des puissances injectées au niveau du moteur M1 :
W0 = puissance nulle,
W1 = 7% de la puissance globale,
W2 = 15% de la puissance globale,
W3 = 24% de la puissance globale,
W4 = 33% de la puissance globale.

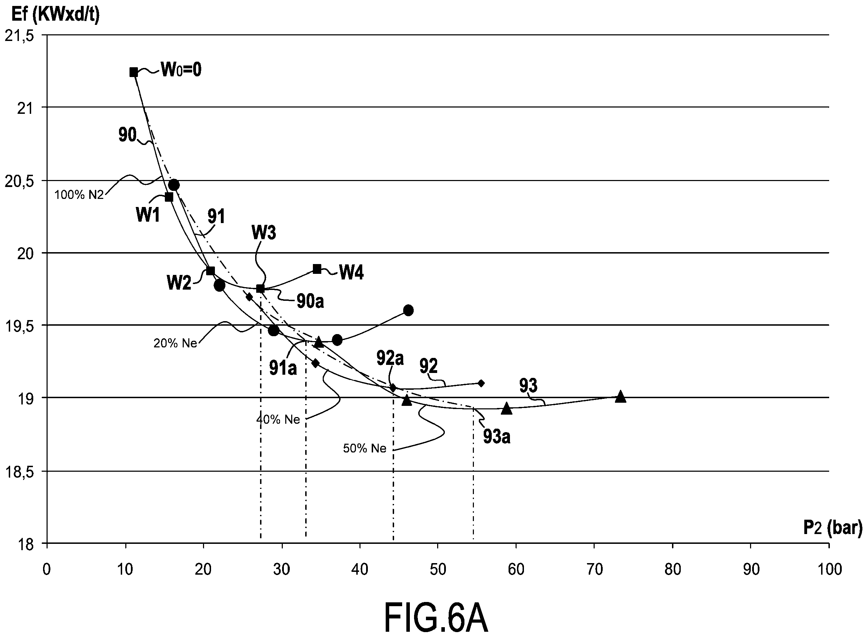

De manière similaire sur le diagramme de la figure 6A, on a représenté le rendement énergétique en fonction de la pression P2, et en fonction des diverses variantes de l'invention. La courbe 90 représente le procédé selon la figure 2 utilisant un gaz réfrigérant composé à 100% d'azote (un mode de réalisation qui n'est pas couvert par les revendications). Comme dans la figure 5A, le point supérieur W0=0 de la courbe 90 correspond à un moteur non alimenté, donc fournissant une puissance nulle. Le point W1 correspond à une puissance W1>0 fournie par ledit moteur M1. De même les points suivants de la courbe correspondent à des puissances croissantes fournies au système au niveau du moteur M1, telles que W4>W3>W2>W1>W0=0 : - lesdites puissances W1 à W4 étant identiques dans les figures 5A et 6A.

Ainsi, sur cette même figure 6A, on observe que lorsque l'on augmente la puissance W injectée au niveau de M1, la pression P1 reste constante, mais la pression P2 augmente et le rendement augmente, c'est à dire que la consommation en énergie exprimée en kW x jour/t diminue, jusqu'à atteindre un minimum 90a, ici sensiblement confondu avec le point W3, puis la dite consommation en énergie augmente à nouveau vers W4. Ce minimum 90a correspond au point bas 70a de la courbe 70 de la figure 5A, pour une consommation en énergie minimale d'environ 19.75 kW x jour/t, une pression P1 d'environ 9 bars et d'une pression P2 d'environ 28 bars. En comparaison, le point de fonctionnement W0 sans apport d'énergie au niveau du moteur M1 correspond, pour un procédé à l'azote pur (un mode de réalisation qui n'est pas couvert par les revendications), à une consommation en énergie d'environ 21.25 kWxd/t, à une même pression P1 d'environ 9 bars et une pression P2 d'environ 11 bars : le rendement énergétique est donc amélioré de 7.06%.

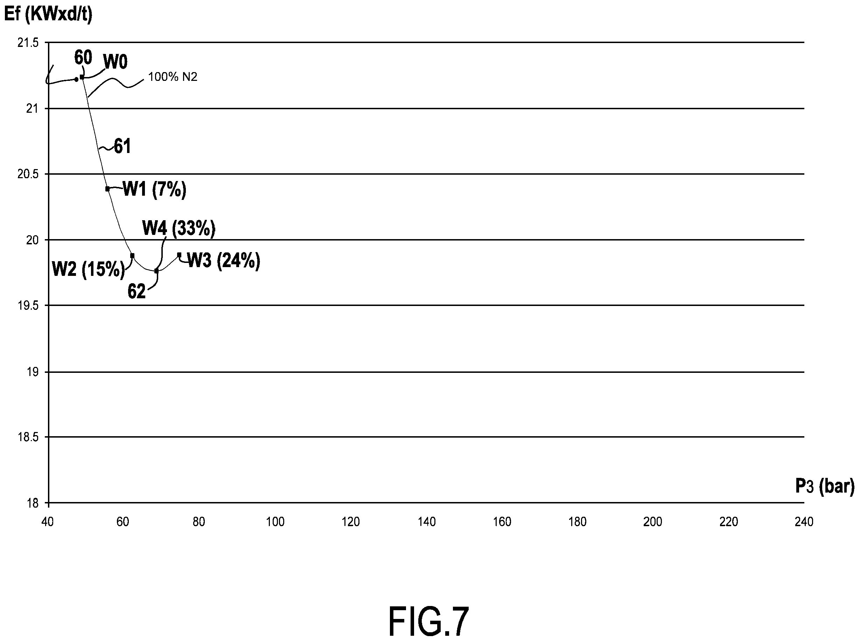

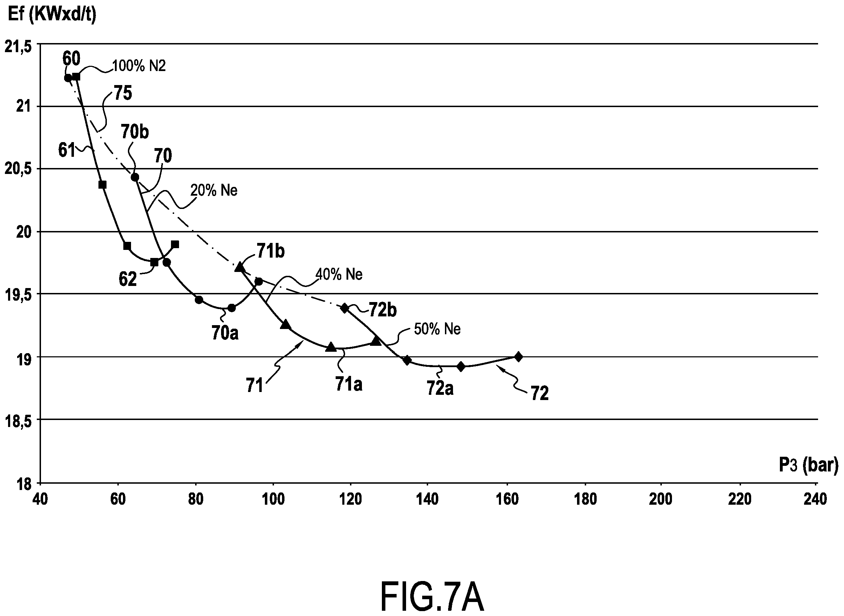

De manière similaire sur le diagramme de la figure 7A, on a représenté le rendement énergétique en fonction de la pression P3, et en fonction des diverses variantes de l'invention, notamment dans le cas d'un mélange azote néon. Les points W0-W1-W2-W3-W4 correspondent aux mêmes niveaux de puissance injectés au niveau du moteur M1 que décrits précédemment en référence aux figures 5A - 6A. P3 représente ainsi la pression maximale du système au niveau du circuit S3 : elle croit proportionnellement à la puissance injectée, ainsi qu'au pourcentage de néon dans le mélange de gaz réfrigérant.

Ainsi, une augmentation de la proportion de puissance injectée W au niveau du moteur M1 des figures 2 - 3 par rapport à la puissance totale injectée:
- n'a pas d'influence sur la pression P1,
- augmente la pression P2,
- augmente la pression maximale P3,
- diminue la consommation en énergie Ef jusqu'à une valeur minimale, pour une proportion de puissance W donnée, puis cette consommation en énergie croît à nouveau au-delà de cette dite proportion.

De la même manière, l'utilisation d'un mélange azote-néon conduit à une amélioration des performances énergétiques telle que représenté sur les figures 5A et 6A, tant dans les procédés conventionnels décrits en référence à la figures 1 que dans les procédés décrits en référence aux figures 2 - 3.

Ainsi, en considérant un mélange comportant 20% de néon, la pression P1 est d'environ 12.5 bars et la courbe 71 de la figure 5A représente les variations de la consommation en énergie pour les mêmes puissances croissantes fournies au système au niveau du moteur M1 (W4>W3>W2>W1>W0=0).

Pour ce même pourcentage en néon de 20%, sur la courbe 91 de la figure 6A, on a représenté les variations de la consommation en énergie pour les mêmes puissances croissantes fournies au système au niveau du moteur M1 (W4>W3>W2>W1>WO=0), en fonction de la pression P2. On observe ainsi que lorsque l'on augmente la puissance W injectée au niveau de M1, le rendement augmente, c'est à dire que la consommation en énergie exprimée en kWxd/t diminue, jusqu'à atteindre un minimum 91a, situé entre les points W2 et W3 de la dite courbe 91, puis la dite consommation en énergie augmente à nouveau vers W4. Ce minimum correspond au point bas 71a de la courbe 71 de la figure 5A, pour une consommation en énergie minimale d'environ 19.4 kWxd/t, une pression P1 d'environ 12.5 bars et d'une pression P2 d'environ 33 bars. En comparaison, le point de fonctionnement W0 de la même courbe 91 correspondant à un mélange à 20%, de néon, sans apport d'énergie au niveau du moteur M1 correspond, à une consommation en énergie d'environ 20.45 kW x jour/t, à une même pression P1 d'environ 12.5 bars et une pression P2 d'environ 17 bars, ce qui illustre l'amélioration du rendement énergétique lorsque l'on combine l'augmentation du pourcentage de néon et l'augmentation de la puissance injectée au niveau du moteur M1.

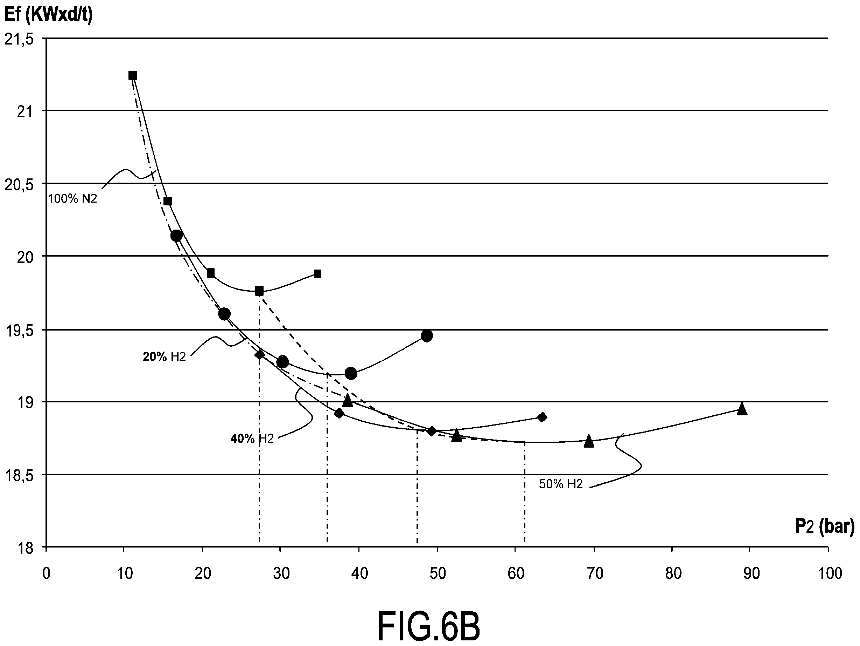

Les mêmes effets sont observés pour l'hydrogène sur les figures 5B et 6B.

Sur les figures 5 à 7, on a représenté des diagrammes de performances d'un procédé conventionnel et du procédé selon l'invention, de liquéfaction d'un gaz naturel constitué de 85% de méthane, et 15% desdits autres constituant.

Dans le diagramme de la figure 7A, la pression maximale P3 est représentée en abscisses et l'énergie par unité de masse de gaz est en ordonnée. L'énergie est représentée en kW x jour/tonne de gaz naturel (1 kW x jour/t = 0.024 kWh/kg). Ainsi, pour un gaz réfrigérant constitué de 100% d'azote, le point de fonctionnement du processus conventionnel en référence à la figure 1 est situé en 60 sur cette figure 7A. Par contre, dans le procédé selon l'invention en référence aux figures 2 et 3, pour diverses compositions de mélange azote-néon, en injectant de la puissance au niveau du moteur M1, on peut faire varier le rendement de l'installation selon la courbe 70 (20% de néon) et autres courbes (40 - 50% de néon). Ainsi, d'un point de fonctionnement à 45-50 bars selon le procédé conventionnel, correspondant à une consommation en énergie d'environ 21.3 kW x d/t, on peut augmenter le rendement thermodynamique en augmentant la pression maximale. Ainsi, comme représenté sur ce même diagramme, pour un gaz réfrigérant constitué de 100% d'azote pur (un mode de réalisation qui n'est pas couvert par les revendications), en injectant une partie de la puissance au niveau du moteur M1, et en opérant à une pression d'environ 68 bars, la consommation en énergie chute à environ 19.75 kWxd/t, ce qui représente un gain de rendement de 7.28%.

De manière générale, en opérant à plus forte pression, pour un débit massique donné, les débits volumiques sont réduits au prorata de l'augmentation de la dite pression : - les conduites sont de plus faible diamètre, mais leur résistance mécanique, donc leur épaisseur, leur poids et leur coût sont augmentés d'autant : - par contre, l'emprise au sol s'en trouve réduite d'autant, ce qui est très intéressant dans le cas d'installations en environnement confiné tel que sur un support flottant ancré en mer, ou encore sur un méthanier dans le cas d'unité de reliquéfaction de boil-off. De la même manière, les compresseurs et les turbines opérant à plus forte pression sont beaucoup plus compacts. En ce qui concerne les échangeurs cryogéniques, l'augmentation de la pression améliore aussi les transferts thermiques, mais les surfaces d'échange thermique ne sont pas réduites dans la même proportion que dans le cas des conduites et des compresseurs et des turbines. En revanche, leur poids augmente de manière importante car ils doivent résister à cet accroissement de pression.

Ainsi, globalement, le procédé selon l'invention des figures 2-3 conduit à des installations présentant une compacité plus grande et à une amélioration importante du rendement énergétique lorsque le gaz réfrigérant est de l'azote pur (un mode de réalisation qui n'est pas couvert par les revendications), ledit rendement énergétique étant encore amélioré quand le gaz réfrigérant est un mélange d'azote et, soit de néon, soit d'hydrogène.

Sur la figure 7A, on a représenté un diagramme de performances d'un procédé conventionnel en référence à la figure 1, et du procédé selon l'invention des figures 2-3 utilisant comme gaz réfrigérant un mélange d'azote et de néon, dans lequel la pression maximale P3 est représentée en abscisses et l'énergie par unité de masse de gaz est en ordonnée. L'énergie est représentée en KW x jour par tonne de gaz naturel (kW x d/t).

Ainsi, pour une composition donnée de gaz, le point de fonctionnement du processus conventionnel en référence à la figure 1 est situé en 60 sur cette figure 7A. Dans le procédé selon l'invention en référence aux figures 2 et 3, utilisant un gaz réfrigérant composé de 100% d'azote, en injectant de la puissance au niveau du moteur M1, on peut faire varier le rendement de l'installation selon la courbe 61 avec un point de fonctionnement optimum 62 à environ 68 bars, correspondant à une consommation en énergie d'environ 19.75 kWxd/t, ce qui représente un gain de rendement de 7.28% par rapport au point de fonctionnement 60 du procédé conventionnel.

En utilisant comme gaz réfrigérant un mélange de 80% d'azote et de 20% de néon, on peut augmenter la pression, comme représenté sur la courbe 70, sans que le mélange de gaz n'atteigne son point de rosée, jusqu'à une valeur optimale 70a d'environ 88 bars et pour une consommation en énergie minimale d'environ 19.4 kWxd/t, ce qui représente un gain de rendement thermodynamique de 1.77% par rapport au point de fonctionnement 62 du procédé selon l'invention avec un gaz réfrigérant composé de 100% d'azote et un gain de rendement thermodynamique de 8.92% par rapport au point de fonctionnement 60 du procédé conventionnel.

En utilisant comme gaz réfrigérant un mélange de 60% d'azote et de 40% de néon, on peut augmenter la pression, comme représenté sur la courbe 71, sans que le mélange de gaz n'atteigne son point de rosée, jusqu'à une valeur optimale 71a d'environ 118 bars et pour une consommation en énergie minimale d'environ 19.15 kWxd/t, ce qui représente un gain de rendement thermodynamique de 3.04% par rapport au point de fonctionnement 62 du procédé selon l'invention avec un gaz réfrigérant composé de 100% d'azote et un gain de rendement thermodynamique de 10.09% par rapport au point de fonctionnement 60 du procédé conventionnel.

En utilisant comme gaz réfrigérant un mélange de 50% d'azote et de 50% de néon, on peut augmenter la pression, comme représenté sur la courbe 72, sans que le mélange de gaz n'atteigne son point de rosée, jusqu'à une valeur optimale 72a d'environ 145 bars et pour une consommation en énergie minimale d'environ 18.8 kWxd/t, ce qui représente un gain de rendement thermodynamique de 4.81% par rapport au point de fonctionnement 62 du procédé selon l'invention avec un gaz réfrigérant composé de 100% d'azote et un gain de rendement thermodynamique de 11.74% par rapport au point de fonctionnement 60 du procédé conventionnel.

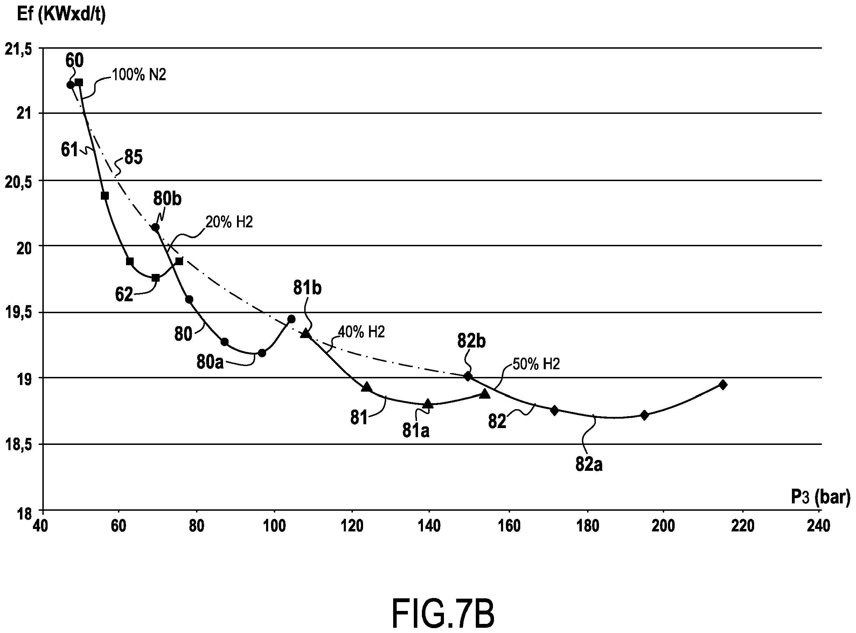

De la même manière, comme représenté sur le diagramme de la figure 7B on utilise avantageusement comme gaz réfrigérant un mélange d'azote et d'hydrogène.

Ainsi, en utilisant comme gaz réfrigérant un mélange de 80% d'azote et de 20% d'hydrogène, on peut augmenter la pression, comme représenté sur la courbe 80, sans que le mélange de gaz n'atteigne son point de rosée, jusqu'à une valeur optimale 80a d'environ 94 bars et pour une consommation en énergie minimale d'environ 19.2 kWxd/t, ce qui représente un gain de rendement thermodynamique de 2.78% par rapport au point de fonctionnement 62 du procédé selon l'invention des figures 2-3 avec un gaz réfrigérant composé de 100% d'azote, et un gain de rendement thermodynamique de 9.86% par rapport au point de fonctionnement 60 du procédé conventionnel de la figure 1.

En utilisant comme gaz réfrigérant un mélange de 60% d'azote et de 40% d'hydrogène, on peut augmenter la pression, comme représenté sur la courbe 81, sans que le mélange de gaz n'atteigne son point de rosée, jusqu'à une valeur optimale 81a d'environ 140 bars et pour une consommation en énergie minimale d'environ 18.8 kWxd/t, ce qui représente un gain de rendement thermodynamique de 4.81% par rapport au point de fonctionnement 62 du procédé selon l'invention des figures 2-3 avec un gaz réfrigérant composé de 100% d'azote et un gain de rendement thermodynamique de 11.74% par rapport au point de fonctionnement 60 du procédé conventionnel de la figure 1.

En utilisant comme gaz réfrigérant un mélange de 50% d'azote et de 50% d'hydrogène, on peut augmenter la pression, comme représenté sur la courbe 82, sans que le mélange de gaz n'atteigne son point de rosée, jusqu'à une valeur optimale 82a d'environ 186 bars et pour une consommation en énergie minimale d'environ 18.7 kWxd/t, ce qui représente un gain de rendement thermodynamique de 5.32% par rapport au point de fonctionnement 62 du procédé selon l'invention des figures 2-3 avec un gaz réfrigérant composé de 100% d'azote et un gain de rendement thermodynamique de 12.21% par rapport au point de fonctionnement 60 du procédé conventionnel de la figure 1.

Ainsi, un pourcentage croissant de gaz complémentaire, soit de l'hydrogène, soit du néon, rajouté à de l'azote pour constituer un gaz réfrigérant, améliore de manière radicale de rendement thermodynamique du procédé, tout en autorisant un fonctionnement à plus haute pression, ce qui implique des équipements plus compacts, ce qui est très avantageux dès lors que l'on ne dispose que de surfaces très réduites, ce qui est le cas sur un support flottant ancré en mer, ou à bord d'un méthanier, dans le cas d'unités de reliquéfaction.

Le procédé selon l'invention utilise soit un mélange d'azote et de néon, soit d'azote et d'hydrogène, et malgré son rendement légèrement inférieur, on privilégiera l'utilisation du mélange d'azote et de néon, car le néon est un gaz inerte, alors que l'hydrogène est combustible et reste dangereux et délicat à opérer, surtout à haute pression dans des installations confinées à bord d'un support flottant. De plus l'hydrogène est un gaz qui percole très facilement à travers des joints élastomériques et même dans certains cas à travers les métaux, surtout à très haute pression, et de ce fait le procédé selon l'invention basé sur l'utilisation d'un mélange azote-hydrogène ne constitue pas la version préférée de l'invention : la version préférée de l'invention reste l'utilisation comme gaz réfrigérant d'un mélange d'azote et de néon dans les dispositifs décrits en référence aux diverses figures.

De la même manière, on améliore le rendement des procédés conventionnels utilisant comme gaz réfrigérant de l'azote, en considérant un mélange binaire azote-néon ou azote-hydrogène.

Ainsi, comme représenté sur le diagramme de la figure 7A, la courbe 75 représente la variation du rendement d'un procédé conventionnel selon la figure 1, ou de ses variantes, en fonction du pourcentage de gaz néon dans le gaz réfrigérant. Pour un pourcentage de 20% de néon, le point de fonctionnement se situe en 70b, ce qui correspond à une pression maximale P3 de 63 bars environ et une consommation en énergie d'environ 20.45 kWxd/t, ce qui représente un gain de rendement thermodynamique de 3.76% par rapport au point de fonctionnement 60 du même procédé conventionnel avec un gaz réfrigérant composé de 100% d'azote.

Pour un pourcentage de 40% de néon, le point de fonctionnement se situe en 71b, ce qui correspond à une pression maximale P3 de 90 bars environ et une consommation en énergie d'environ 19.70 kWxd/t, ce qui représente un gain de rendement thermodynamique de 7.29% par rapport au point de fonctionnement 60 du même procédé conventionnel avec un gaz réfrigérant composé de 100% d'azote.

Pour un pourcentage de 50% de néon, le point de fonctionnement se situe en 72b, ce qui correspond à une pression maximale P3 de 120 bars environ et une consommation en énergie d'environ 19.35 kWxd/t, ce qui représente un gain de rendement thermodynamique de 8.94% par rapport au point de fonctionnement 60 du même procédé conventionnel avec un gaz réfrigérant composé de 100% d'azote.

De la même manière avec un mélange azote-hydrogène comportant 20% d'hydrogène, comme représenté sur la figure 7B, le point de fonctionnement se situe en 80b, ce qui correspond à une pression maximale P3 de 68 bars environ et une consommation en énergie d'environ 20.2 kWxd/t, ce qui représente un gain de rendement thermodynamique de 4.94% par rapport au point de fonctionnement 60 du même procédé conventionnel avec un gaz réfrigérant composé de 100% d'azote.

Pour un pourcentage de 40% d'hydrogène, le point de fonctionnement se situe en 81b, ce qui correspond à une pression maximale P3 de 108 bars environ et une consommation en énergie d'environ 19.8 kWxd/t, ce qui représente un gain de rendement thermodynamique de 6.82% par rapport au point de fonctionnement 60 du même procédé conventionnel avec un gaz réfrigérant composé de 100% d'azote.

Pour un pourcentage de 50% d'hydrogène, le point de fonctionnement se situe en 82b, ce qui correspond à une pression maximale P3 de 150 bars environ et une consommation en énergie d'environ 19 kWxd/t, ce qui représente un gain de rendement thermodynamique de 10.59% par rapport au point de fonctionnement 60 du même procédé conventionnel avec un gaz réfrigérant composé de 100% d'azote.

A titre d'exemple, une unité de liquéfaction conventionnelle est dimensionnée par rapport aux puissances des turbines à gaz disponibles, les turbines de forte puissance étant couramment de 25MW.

On cherche en général à augmenter la puissance de l'installation, et il est alors possible d'installer en parallèle deux turbines à gaz (GT1 et GT2) identiques pour obtenir 30MW (2x15MW), voire 40MW (2x20MW), mais on alors deux lignes de machines tournantes, ce qui augmente les encombrements, les quantités de conduites et bien sûr les coûts.

En installant une seule turbine GT de 25MW en C3 comme sur la figures 2 et en rajoutant de la puissance au niveau du deuxième moteur M2, par exemple 5MW, pour obtenir un total de 30MW, ou 15MW pour obtenir un total de 40MW, le fonctionnement du procédé en référence à la figure 2 est identique en termes de rendement à celui utilisant deux turbines à gaz (GT1 et GT2) en parallèle.

Ainsi, en considérant une turbine à gaz GT de 25MW, l'ajout de 5MW de puissance au niveau du moteur (M2), de préférence grâce à une motorisation électrique, donne plus de souplesse au fonctionnement et permet ainsi un accroissement de puissance de 20%. Par contre, le rendement de l'ensemble reste inchangé, sensiblement à 21.25 kW x jour/t de LNG produit comme représenté sur le diagramme de la figure 7 au niveau du point 60.

Si par contre, on fournit la même puissance de 5MW au niveau du premier moteur M1, la puissance globale est toujours de 30MW, mais dans ce cas le rendement de l'ensemble est amélioré et atteint sensiblement la valeur de 19.8 kW x jour/t de LNG produit, ce qui représente un gain de 6.59% pour la même puissance globale de 30MW, par rapport à une injection de puissance de 5MW au niveau du deuxième moteur M2, comme détaillé précédemment. Ledit apport de puissance de 5MW au niveau du premier moteur M1 représente alors 16.6% de la puissance globale et ledit rendement (19.8 kW x jour/t) correspond sensiblement au point W2 du diagramme de la figure 7.

De la même manière sur la figure 3, en installant une seule turbine GT de 25MW en C2 comme sur la figure 3 et en rajoutant de la puissance au niveau de la turbine GT, par exemple 5MW pour obtenir un total de 30MW, ou 10MW pour obtenir un total de 40MW, le fonctionnement du procédé en référence à la figure 2 est identique en termes de rendement à celui utilisant deux turbines à gaz (GT1 et GT2) en parallèle.

Ainsi, en considérant une turbine à gaz GT de 25MW, l'ajout de 5MW de puissance au niveau de la turbine GT, donne plus de souplesse au fonctionnement et permet ainsi un accroissement de puissance de 20%. Par contre, le rendement de l'ensemble reste inchangé, sensiblement à 21.25 kW x jour/t de LNG produit comme représenté sur le diagramme de la figure 7 au niveau du point 60.

Si par contre, on fournit la même puissance de 5MW au niveau du premier moteur M1, la puissance globale est toujours de 30MW, mais dans ce cas le rendement de l'ensemble est amélioré et atteint sensiblement la valeur de 19.8 kW x jour/t de LNG produit, ce qui représente un gain de 6.59% pour la même puissance globale de 30MW, par rapport à une injection de puissance de 5MW au niveau du deuxième moteur M2, comme détaillé précédemment. Ledit apport de puissance de 5MW au niveau du premier moteur M1 représente alors 16.6% de la puissance globale et ledit rendement (19.8 kW x jour/t) correspond sensiblement au point W2 du diagramme de la figure 7.

Ainsi, en fonction de la production de gaz naturel, tant en quantité qu'en qualité, en provenance des nappes souterraines, on utilisera avantageusement une turbine à gaz GT, par exemple de 25MW, à plein régime en permanence,
- que l'on complètera par injection de puissance au niveau de la turbine GT (fig. 3) ou du deuxième moteur M2 (fig. 2) sans changer le rendement global (point WO de la figure 7), et
- que l'on complètera, voire le cas échéant modulera, par injection de puissance au niveau du premier moteur M1 ce qui a pour effet d'améliorer le rendement global selon la courbe 61 de la même figure 7, jusqu'à atteindre un optimum, c'est à dire un minimum de consommation d'énergie de 19.75 kW x jour/t correspondant sensiblement au point W3 de la dite courbe 61 : l'énergie injectée au niveau dudit premier moteur M1 représentant alors dans ce cas sensiblement 24% de l'énergie totale.

D'une manière générale, on fonctionnera avec une turbine à gaz GT à plein régime, que l'on complètera par un apport de puissance au niveau du premier moteur M1, ledit apport étant limité à environ 24% de la puissance globale de manière à optimiser le rendement à la valeur minimale de 19.75 kW x jour/t, puis en cas de nécessité, on augmentera la puissance globale par injection de puissance au niveau du deuxième moteur M2, et concomitamment on réajustera la puissance injectée au niveau du premier moteur M1, de manière à ce que la dite puissance soit toujours sensiblement égale à environ 24% de la puissance globale de manière à conserver le rendement de l'installation à la valeur optimale de 19.75 kW x jour/t.

Ledit rendement optimal de 19.75 kW x jour/t pour une puissance du premier moteur M1 représentant 24% de la puissance totale est valable pour un fluide réfrigérant constitué de 100% d'azote (un mode de réalisation qui n'est pas couvert par les revendications).

Dans le cas de mélanges azote-néon ou azote-hydrogène, le rendement optimal ainsi que le pourcentage de puissance varient en fonction des mélanges et des pourcentages de néon ou d'hydrogène, mais les avantages détaillés précédemment restent valables et même se cumulent.

L'invention a été décrite avec un mélange constitué essentiellement d'azote et de néon ou d'hydrogène, l'hélium ne représentant pas d'intérêt avéré dans le processus.

En effet des traces d'autres gaz dans des proportions faibles, ne dépassant pas globalement par exemple 0.5 à 1%, ne perturbent pas le procédé, ni son rendement global, car ils se liquéfieront aux point bas des zones froides et y resteront confinés, sauf s'ils sont entraînés par la vitesse du gaz réfrigérant. Le seul vrai danger serait que ces particules liquides entrent en contact avec les aubes des compresseurs ou des turbines en rotation à grande vitesse, ce qui est facile à éviter en disposant les points bas en des endroits privilégiés et en les équipant avantageusement de purgeurs vers l'atmosphère. Ces purgeurs permettent ainsi d'éliminer rapidement les gaz résiduels non désirés et donc de disposer alors, après quelques heures, voire quelques jours de fonctionnement, d'un mélange vraiment binaire de gaz réfrigérant.

## Revendications

1. Procédé de liquéfaction d'un gaz naturel comprenant majoritairement du méthane, de préférence, au moins 85% de méthane, les autres composants comprenant essentiellement de l'azote et des alcanes en C-2 à C-4, dans lequel on liquéfie le dit gaz naturel à liquéfier par circulation dudit gaz naturel à une pression PO supérieure ou égale à la pression atmosphérique (Patm.), de préférence PO étant supérieure à la pression atmosphérique, dans au moins un échangeur de chaleur cryogénique (EC1. EC2, EC3) par circulation en circuit fermé à contre-courant en contact indirect avec au moins un flux de gaz réfrigérant restant à l'état gazeux comprimé à une pression PI entrant dans le dit échangeur cryogénique à une température T3' inférieure à T3, T3 étant la température de liquéfaction du dit gaz naturel liquéfié en sortie dudit échangeur cryogénique, T3 étant inférieure ou égale à la température de liquéfaction du dit gaz naturel liquéfié à la pression atmosphérique, **caractérisé en ce que** le dit gaz réfrigérant consiste essentiellement en un mélange binaire d'azote et d'un autre constituant choisi parmi le néon et l'hydrogène où le néon ou l'hydrogène représente de 20 à 50% molaire du dit mélange..

2. Procédé selon la revendication 1, **caractérisé en ce que** ledit gaz réfrigérant consiste en un mélange binaire d'azote et néon.

3. Procédé selon l'une des revendications 1 ou 2, **caractérisé en ce qu'**on liquéfie le dit gaz naturel à liquéfier en réalisant les étapes concomitantes suivantes de :
(a) circulation dudit gaz naturel à liquéfier circulant (Sg) à une pression P0 supérieure ou égale à la pression atmosphérique (Patm), de préférence P0 étant supérieure à la pression atmosphérique, dans au moins trois échangeurs de chaleur cryogéniques (ECI, EC2, EC3) disposés en série dont :
- un premier échangeur (ECI) dans lequel le dit gaz naturel entrant à une température TO est refroidit et sort (BB) à une température TI inférieure à TO, puis
- un deuxième échangeur (EC2) dans lequel le gaz naturel est entièrement liquéfié et sort (CC) à une température T2 inférieure à TI et supérieure à T3, et
- un troisième échangeur (EC3) dans lequel ledit gaz naturel liquéfié est refroidit de T2 à T3, et
(b) circulation en circuit fermé à contre-courant d'au moins un premier flux (S I) de gaz réfrigérant à l'état gazeux à une pression PI inférieure à P3 en contact indirect avec et à contre-courant du flux de gaz naturel (Sg), ledit premier flux (S I) à une pression PI traversant les trois échangeurs (ECI, EC2, EC3) en entrant (DD) dans le dit troisième échangeur (EC3) à une température T3' inférieure à T3, puis entrant (CC) à une température T2' inférieure à T2 dans le dit deuxième échangeur (EC2), puis entrant (BB) à une température TI' inférieure à TI dans ledit premier échangeur (ECI) et sortant (AA) dudit premier échangeur (ECI) à une température TO' inférieure ou égale à TO,
- le dit premier flux (SI) de gaz réfrigérant à PI et T3' étant obtenu par détente dans au moins un premier détendeur (EI) d'au moins une première partie (DI) d'au moins un deuxième flux (S2) de gaz réfrigérant comprimé à P3 supérieure à PI circulant à co-courant dudit gaz naturel entrant (AA) dans ledit premier échangeur (ECI) à TO et sortant (CC) dudit deuxième échangeur (EC2) sensiblement à T2, et
- une deuxième partie (D2) dudit deuxième flux (S2) de gaz réfrigéra nt comprimé P3 circula nt à co-courant dudit gaz naturel entrant
(AA) dans ledit premier échangeur (ECI) à TO et sortant dudit premier échangeur sensiblement à TI est détendue dans un deuxième détendeur (E2) à la dite pression PI et à une dite température T2' ; et est recyclée pour rejoindre ledit premier flux à l'entrée (CC) dudit deuxième échangeur, le débit D2 de la dite deuxième partie de deuxième flux étant supérieur au débit D1 de la première partie de deuxième flux, et
(c) le dit deuxième flux (S2) comprimé à P3 étant obtenu par compression par au moins un compresseur (CI, C2, C3) suivi d'au moins un refroidissement (HI, H2) dudit premier flux (SI) de gaz réfrigérant recyclé sortant (AA) du dit premier échangeur (EC1), de préférence au moins un premier compresseur (CI) couplé audit premier détendeur (EI), et
(d) de préférence, après l'étape (a) on dépressurise le gaz naturel liquéfié depuis la pression PO à la pression atmosphérique le cas échéant.

4. Procédé selon la revendication 3, **caractérisé en ce qu'**on met en œuvre trois compresseurs dont un premier compresseur et un deuxième compresseur disposés en parallèle, comprenant :
- un troisième compresseur (C3) actionné par un moteur de préférence une turbine à gaz GT pour comprimer à P'3, P'3 étant compris entre PI et P3, la totalité dudit premier flux de gaz réfrigérant provenant de la sortie (AA) dudit premier échangeur (EC1), et
- un premier compresseur (CI) couplé au premier détendeur (EI) consistant en une turbine, pour comprimer de P'3 à P3, une partie (DI') du dit premier flux de gaz réfrigérant, comprimé par le troisième compresseur (C3), et
- un deuxième compresseur (C2) couplé au deuxième détendeur (E2) consistant en une turbine, pour comprimer de P'3 à P3 une partie (D2') dudit premier flux de gaz réfrigérant comprimé par le troisième compresseur (C3).

5. Procédé selon l'une des revendications 1 à 2, **caractérisé en ce qu'**on liquéfie le dit gaz naturel à liquéfier en réalisant les étapes concomitantes suivantes de : (a) circulation dudit gaz naturel à liquéfier circulant (Sg) à une pression PO supérieure ou égale à la pression atmosphérique (Patm), de préférence PO étant supérieure à la pression atmosphérique, dans au moins trois échangeurs de chaleur cryogéniques (ECI, EC2, EC3) disposés en série dont :
- un premier échangeur (ECI) dans lequel le dit gaz naturel entrant à une température TO est refroidit et sort (BB) à une température TI inférieure à TO, puis
- un deuxième échangeur (EC2) dans lequel le gaz naturel est entièrement liquéfié et sort (CC) à une température 12 inférieure à TI et supérieure à T3, et
- un troisième échangeur (EC3) dans lequel ledit gaz naturel liquéfié est refroidit de T2 à T3, et
(b) circulation à circuit fermé d'au moins deux flux (SI, S3) de gaz réfrigérant à l'état gazeux dénommés premier et troisième flux respectivement à des pressions différentes PI et P2, traversant au moins deux dits échangeurs en contact indirect avec et à contre-courant du flux de gaz naturel (Sg), comprenant :
- un premier flux de gaz réfrigérant (SI) à une pression PI inférieure à P3 traversant les trois échangeurs (ECI, EC2, EC3) entrant (DD) dans le dit troisième échangeur (EC3) à une température T3' inférieure à T3, puis entrant (CC) à une température T2' inférieure à T2 dans le dit deuxième échangeur (EC2), puis entrant (BB) à une température TI' inférieure à TI dans ledit premier échangeur (ECI) et sortant (AA) dudit premier échangeur à une température TO' inférieure ou égale à TO, le dit premier flux de gaz réfrigérant à PI et T3' étant obtenu par détente dans au moins un premier détendeur (EI) d'une première partie (DI) d'un deuxième flux (S2) de gaz réfrigérant comprimé à la pression P3 supérieure à P2, ledit deuxième flux (S2) circulant en contact indirect avec et à co-courant dudit flux gaz naturel (Sg) en entrant (AA) dans ledit premier échangeur (ECI) à TO et ladite première partie (DI) du deuxième flux sortant (CC) dudit deuxième échangeur (EC2) sensiblement à T2, et
- un troisième flux (S3) à une pression P2 supérieure à PI et inférieure à P3 circulant en contact indirect avec et à co-courant dudit premier flux, traversant uniquement les dits deuxième et premier échangeurs (EC2, EC1), entrant (CC) dans ledit deuxième échangeur à une température 12' inférieure à T2 et sortant (AA) dudit premier échangeur (EC1) à TO' inférieur ou égale à TO, le dit troisième flux (S3) de gaz réfrigérant à P2 et T2 étant obtenu par détente dans un deuxième détendeur (E2) d'une deuxième partie (D2) dudit deuxième flux (S2) de gaz réfrigérant sortant dudit premier échangeur sensiblement à TI, le débit D2 de la dite deuxième partie de deuxième flux étant supérieur au débit DI de la première partie de deuxième flux,
(c) le dit deuxième flux de gaz réfrigérant (S2) comprimé à la pression P3 étant obtenu par compression par au moins deux compresseur (CI, C2, C3) et refroidissement (HI, H2) desdits premier et troisième flux (SI, S3) de gaz réfrigérant sortant (AA) du dit premier échangeur (EC1) à PI et respectivement P2, de préférence par au moins deux premier et deuxième compresseurs (CI, C2) disposés en série et couplés respectivement auxdits premier et deuxième détendeurs (EI, E2) consistant en des turbines, et
(d) de préférence, après l'étape (a) on dépressurise le gaz naturel liquéfié sortant (DD) dudit troisième échangeur à T3, de la pression PO à la pression atmosphérique le cas échéant.

6. Procédé selon la revendication 5, **caractérisé en ce que** l'on fait varier de façon contrôlée la dite pression P2, de manière à ce que l'énergie consommée pour la mise en uvre du procédé (Ef) soit minimale, de préférence lorsque la composition du gaz naturel à liquéfier varie.

7. Procédé selon l'une des revendications 5 ou 6, **caractérisé en ce qu'**au moins un compresseur (CI) est couplé à un moteur (MI) permettant de faire varier de façon contrôlée la pression P2 en apportant de la puissance de façon contrôlée audit compresseur, de préférence ledit moteur (MI) apportant chacun au moins 5%, de préférence de 5 à 30%, de la puissance totale apportée à l'ensemble des dits compresseurs mis en uvre (CI, C2, C3).

8. Procédé selon l'une des revendications 5 à 7, dans lequel on met en œuvre au moins un premier compresseur (CI) comprimant de PI à P2 la totalité du dit premier flux de gaz réfrigérant sortant (AA) dudit premier échangeur (EC1), et au moins un deuxième compresseur (C2), comprimant de P2 à au moins P'3, P'3 étant une pression inférieure ou égale à P3 et supérieure à P2, d'une part ledit troisième flux (S3) de gaz réfrigérant sortant à P2 du dit premier échangeur (EC1) et d'autre part ledit premier flux de gaz réfrigérant comprimé à P2 sortant dudit premier compresseur, pour obtenir ledit deuxième flux de gaz réfrigérant à P3 et T0 après refroidissement (HI, H2), **caractérisé en ce que** : - les deux premier et deuxième compresseurs (CI, C2) disposés en série sont couplés respectivement auxdits premier et deuxième détendeurs (EI, E2) consistant en des turbines de récupération d'énergie, et
- au moins le dit premier compresseur (CI) est couplé à un premier moteur (MI), et
- une turbine à gaz (GT) est couplée soit audit deuxième compresseur, celui-ci comprimant ledit deuxième flux de gaz réfrigérant directement à P3, soit à un troisième compresseur (C3) monté en série après le deuxième compresseur (C2), le dit troisième compresseur comprimant de P'3 à P3 ledit deuxième flux de gaz réfrigérant, ladite turbine à gaz apportant la majeur partie de la puissance totale apportée à l'ensemble des dits compresseurs mis en œuvre (CI, C2, C3).

9. Procédé selon la revendication 7 ou 8, **caractérisé en ce qu'**on met en œuvre deux compresseurs (CI, C2) montés en série, comprenant :
(i) un premier compresseur (CI) couplé audit premier détendeur (EI), comprimant de PI à P2 la totalité du dit premier flux de gaz réfrigérant sortant (AA) dudit premier échangeur (EC1), et
(ii) un deuxième compresseur (C2) couplé audit deuxième détendeur (E2), comprimant de P2 à au moins P'3, P'3 étant supérieur à P2 et inférieur ou égal à P3, d'une part le dit troisième flux (S3) de gaz réfrigérant sortant à P2 du dit premier échangeur (ECI) et d'autre part le dit premier flux de gaz réfrigérant comprimé à P2 sortant dudit premier compresseur, pour obtenir le dit deuxième flux de gaz réfrigérant à P3 et TO après refroidissement (HI, H2), et
(iii) ledit premier compresseur (CI) est couplé à un premier moteur (MI), et ledit deuxième compresseur (C2) étant couplé à une turbine à gaz (GT), ledit premier moteur permettant de faire varier de façon contrôlée la pression P2 en apportant de la puissance de façon contrôlée audit premier compresseur CI, ledit premier moteur (MI) apportant au moins 3%, de préférence encore de 3 à 30% de la puissance totale apportée à l'ensemble des dits compresseurs mis en œuvre (CI, C2), ledit deuxième compresseur (C2) actionné par une turbine à gaz (GT) fournissant de 97 à 70% de la puissance totale mis en œuvre.

10. Procédé selon la revendication 7 ou 8, **caractérisé en ce qu'**on met en œuvre trois compresseurs (CI, C2, C3) montés en série, comprenant :
(i) un premier compresseur (CI) actionné par un premier moteur (MI) et couplé audit premier détendeur (EI), comprimant de PI à P2 la totalité du dit premier flux de gaz réfrigérant sortant (AA) dudit premier échangeur (ECI), et
(ii) un deuxième compresseur (C2) actionné par un deuxième moteur (M2) couplé audit deuxième détendeur (E2), comprimant de P2 à P'3, P'3 étant supérieur à P2 et inférieur à P3, d'une part le dit troisième flux (S3) de gaz réfrigérant sortant à P2 du dit premier échangeur (ECI), et d'autre part le dit premier flux de gaz réfrigérant comprimé à P2 sortant dudit premier compresseur CI, et
(iii) au moins un troisième compresseur (C3) actionné par une turbine à gaz (GT) pour fournir la majeure partie de l'énergie et comprimer de P'3 à P3 la totalité des premier et troisième flux de gaz réfrigérant comprimés sortant dudit deuxième compresseur (C2), pour obtenir le dit deuxième flux de gaz réfrigérant à P3 et TO après refroidissement (HI, H2), et
(iv) ledit moteur (MI) apporte au moins 3%, de préférence encore de 3 à 30% de la puissance totale apportée à l'ensemble des dits compresseurs mis en œuvre (CI, C2, C3), la turbine à gaz (GT) couplée au dit troisième compresseur (C3), ainsi que le moteur (M2) couplé au compresseur (C2) fournissent ensemble de 97 à 70% de la puissance totale apportée à l'ensemble des dits compresseurs mis en œuvre (CI, C2, C3).

11. Procédé selon l'une des revendications 1 à 10, **caractérisé en ce que** la composition du gaz à liquéfier est comprise dans les fourchettes suivantes pour un total de 100% :
- Méthane de 80 à 100%,
- azote de 0 à 20 %,
- éthane de 0 à 20 %,
- propane de 0 à 20 %, et
- butane de 0 à 20 %.

12. Procédé selon l'une des revendications 1 à 11, **caractérisé en ce que** :
- T0 et T0' sont de 10 à 35 °C, et
- T3 et T3' sont de -160 à -170°C, et
- T2 et T2' sont de -100 à - 140°C, et
- TI et TI' sont de -30 à -70°C.

13. Procédé selon l'une des revendications 1 à 12, **caractérisé en ce que** :
- P0 est de 0.5 à 5 MPa, et
- PI est de 0.5 à 5 MPa, et
- P2 est de 1 à 10 MPa, et
- P3 est de 5 à 20 MPa.

14. Procédé selon l'une des revendications 6 à 13, **caractérisé en ce que** l'on fait varier P2 jusqu'à ce que l'énergie totale Ef minimale consommée dans le procédé soit inférieur à 21.5 kW x jour/t de gaz liquéfié produit, de préférence de 18.5 à 20.5 kW x jour/t.

## Patentansprüche

1. Verfahren zum Verflüssigen von Erdgas, das hauptsächlich Methan, vorzugsweise wenigstens 85% Methan, umfasst, wobei die anderen Bestandteile im Wesentlichen Stickstoff und C2- bis C4-Alkane umfassen, wobei das zu verflüssigende Erdgas durch Zirkulieren des Erdgases bei einem Druck PO, der größer oder gleich dem atmosphärischen Druck (Patm) ist, verflüssigt wird, wobei PO vorzugsweise höher als der atmosphärische Druck ist, in wenigstens einem kryogenen Wärmetauscher (EC1, EC2, EC3) zirkuliert, indem es in einem geschlossenen Kreislauf im Gegenstrom in indirektem Kontakt mit wenigstens einem Strom von Kühlgas zirkuliert, das im gasförmigen Zustand verbleibt und bei einem Druck P1 komprimiert ist, der in den kryogenen Wärmetauscher bei einer Temperatur T3' eintritt, die niedriger als T3 ist, wobei T3 die Verflüssigungstemperatur des verflüssigten Erdgases ist, welches aus dem kryogenen Wärmetauscher austritt, wobei T3 kleiner oder gleich der Verflüssigungstemperatur des verflüssigten Erdgases bei atmosphärischem Druck ist, **dadurch gekennzeichnet, dass** das Kühlgas im Wesentlichen aus einem binären Gemisch aus Stickstoff und einem weiteren Bestandteil, ausgewählt aus Neon und Wasserstoff, besteht, wobei das Neon oder der Wasserstoff 20 bis 50 Mol-% des Gemisches ausmacht.

2. Verfahren nach Anspruch 1, **dadurch gekennzeichnet, dass** das Kühlgas aus einem binären Gemisch von Stickstoff und Neon besteht.

3. Verfahren nach einem der Ansprüche 1 oder 2, **dadurch gekennzeichnet, dass** das zu verflüssigende Erdgas durch Durchführen der folgenden begleitenden Schritte verflüssigt wird:
(a) Zirkulieren des zu verflüssigenden Erdgases (Sg) bei einem Druck P0, der höher als oder gleich dem atmosphärischen Druck (Patm) ist, wobei P0 vorzugsweise höher als der atmosphärische Druck ist, in wenigstens drei kryogenen Wärmetauschern (EC1, EC2, EC3), die in Serie angeordnet sind, einschließlich:
- einen ersten Austauscher (EC1), in dem das Erdgas, das bei einer Temperatur TO eintritt, abgekühlt wird und bei einer Temperatur T1, die niedriger als TO ist, austritt (BB), dann
- einen zweiten Austauscher (EC2), in dem das Erdgas vollständig verflüssigt wird und bei einer Temperatur T2, die niedriger als T1 und höher als T3 ist, austritt (CC), und
- einen dritten Austauscher (EC3), in dem das verflüssigte Erdgas von T2 auf T3 abgekühlt wird, und
(b) Zirkulieren im geschlossenen Kreislauf im Gegenstrom wenigstens eines ersten Stroms (S1) von Kühlgas in gasförmigem Zustand bei einem Druck P1, der niedriger als P3 ist, in indirektem Kontakt mit und im Gegenstrom zu dem Strom von Erdgas (Sg), wobei der erste Strom (S1) bei einem Druck P1 durch die drei Austauscher (EC1, EC2, EC3) durchläuft, während er bei einer Temperatur T3', die niedriger als T3 ist, in den dritten Austauscher (EC3) eintritt (DD) und dann bei einer Temperatur T2', die niedriger als T2 ist, in den zweiten Austauscher (EC2) eintritt (CC) und dann bei einer Temperatur T1', die niedriger als T1 ist, in den ersten Austauscher (EC1) eintritt (BB) und den ersten Austauscher (EC1) mit einer Temperatur TO', die niedriger als oder gleich TO ist, verlässt (AA),
- wobei der erste Strom (S1) von Kühlgas bei P1 und T3' durch Expansion in wenigstens einem ersten Druckreduzierer (E1) von wenigstens einem ersten Teil (D1) von wenigstens einem zweiten Strom (S2) von Kühlgas erhalten wird, der bei P3, das größer als P1 ist, komprimiert ist und im Gleichstrom mit dem Erdgas zirkuliert, das in den ersten Austauscher (EC1) bei TO eintritt (AA) und den zweiten Austauscher (EC2) im Wesentlichen bei T2 verlässt (CC), und
- ein zweiter Teil (D2) des zweiten Stroms (S2) von komprimiertem Kühlgas P3, der im Gleichstrom mit dem Erdgas zirkuliert, das in den ersten Austauscher (EC1) bei TO eintritt (AA) und den ersten Austauscher im Wesentlichen bei T1 verlässt, in einem zweiten Druckreduzierer (E2) bei dem Druck P1 und bei der Temperatur T2' expandiert wird; und wiederverwendet wird, um mit dem ersten Strom am Einlass (CC) des zweiten Austauschers zusammen zu fließen, wobei die Strömungsrate D2 des zweiten Teils des zweiten Stroms größer ist als die Strömungsrate D1 des ersten Teils des zweiten Stroms, und
(c) der zweite Strom (S2), der bei P3 komprimiert wird, durch Kompression durch wenigstens einen Kompressor (C1, C2, C3) erhalten wird, gefolgt von wenigstens einer Kühlung (H1, H2) des ersten Stroms (S1) des wiederverwendeten Kühlgases, der den ersten Austauscher (EC1) verlässt (AA), vorzugsweise durch wenigstens einen ersten Kompressor (C1), der mit dem ersten Druckreduzierer (E1) gekoppelt ist, und
(d) vorzugsweise nach Schritt (a) das verflüssigte Erdgas gegebenenfalls von dem Druck PO auf atmosphärischen Druck dekomprimiert wird.

4. Verfahren nach Anspruch 3, **dadurch gekennzeichnet, dass** drei Kompressoren verwendet werden, einschließlich ein erster Kompressor und ein zweiter Kompressor, die parallel angeordnet sind, umfassend:
- einen dritten Kompressor (C3), der von einem Motor, vorzugsweise einer Gasturbine GT, angetrieben wird, um den gesamten ersten Strom von Kühlgas, der vom Auslass (AA) des ersten Austauschers (EC1) kommt, auf P'3 zu komprimieren, wobei P'3 zwischen P1 und P3 liegt, und
- einen ersten Kompressor (C1), der mit dem ersten Druckreduzierer (E1) gekoppelt ist, der aus einer Turbine besteht, um einen Teil (D1') des ersten Stroms von Kühlgas, der durch den dritten Kompressor (C3) komprimiert wurde, von P'3 auf P3 zu komprimieren, und
- einen zweiten Kompressor (C2), der mit dem zweiten Druckreduzierer (E2) gekoppelt ist, der aus einer Turbine besteht, um einen Teil (D2') des ersten Stroms von Kühlgas, der durch den dritten Kompressor (C3) komprimiert wird, von P'3 auf P3 zu komprimieren.

5. Verfahren nach einem der Ansprüche 1 bis 2, **dadurch gekennzeichnet, dass** das zu verflüssigende Erdgas durch Durchführen der folgenden begleitenden Schritte verflüssigt wird:
(a) Zirkulieren des zu verflüssigenden Erdgases im Kreislauf (SG) bei einem Druck PO, der höher oder gleich dem atmosphärischen Druck (Patm) ist, wobei PO vorzugsweise höher als der atmosphärische Druck ist, in wenigstens drei kryogenen Wärmetauschern (EC1, EC2, EC3), die in Serie angeordnet sind, einschließlich:
- einen ersten Austauscher (EC1), in dem das Erdgas, das bei einer Temperatur TO eintritt, abgekühlt wird und bei einer Temperatur T1, die niedriger als TO ist, austritt (BB), dann
- einen zweiten Austauscher (EC2), in dem das Erdgas vollständig verflüssigt wird und bei einer Temperatur 12, die niedriger als T1 und höher als T3 ist, austritt (CC), und
- einen dritten Austauscher (EC3), in dem das verflüssigte Erdgas von T2 auf T3 abgekühlt wird, und
(b) Zirkulieren in einem geschlossenen Kreislauf von wenigstens zwei Strömen (S1, S3) von Kühlgas im gasförmigen Zustand, die als erster bzw. dritter Strom bezeichnet werden, bei unterschiedlichen Drücken P1 und P2, die durch wenigstens zwei der Austauscher in indirektem Kontakt mit und im Gegenstrom zum Strom des Erdgases (Sg) fließen, umfassend
- einen ersten Strom (S1) von Kühlgas bei einem Druck P1, der niedriger ist als P3, der die drei Austauscher (EC1, EC2, EC3) durchläuft, wobei er mit einer Temperatur T3', die niedriger ist als T3, in den dritten Austauscher (EC3) eintritt (DD) und dann mit einer Temperatur T2', die niedriger ist als T2, in den zweiten Austauscher (EC2) eintritt (CC) und dann mit einer Temperatur T1', die niedriger ist als T1, in den ersten Austauscher (EC1) eintritt (BB) und den ersten Austauscher mit einer Temperatur TO', die niedriger ist als oder gleich TO, verlässt (AA), wobei der erste Kühlgasstrom bei P1 und T3' durch Expansion eines ersten Teils (D1) eines zweiten Kühlgasstroms (S2), der auf den Druck P3 höher als P2 komprimiert ist, in wenigstens einem ersten Druckreduzierer (E1) erhalten wird, wobei der zweite Strom (S2) in indirektem Kontakt und im Gleichstrom mit dem Strom des Erdgases (Sg) zirkuliert, während er in den ersten Austauscher (EC1) bei TO eintritt (AA) und der erste Teil (D1) des zweiten Stroms den zweiten Austauscher (EC2) im Wesentlichen bei T2 verlässt (CC), und
- einen dritten Strom (S3) mit einem Druck P2, der höher als P1 und niedriger als P3 ist, der in indirektem Kontakt und im Gleichstrom mit dem ersten Strom zirkuliert, der nur durch den zweiten und den ersten Austauscher (EC2, EC1) fließt, der in den zweiten Austauscher bei einer Temperatur 12' eintritt (CC), die niedriger als T2 ist, und der den ersten Austauscher (EC1) bei TO', die niedriger als oder gleich TO ist, verlässt (AA), wobei der dritte Strom (S3) von Kühlgas bei P2 und T2 durch Expansion eines zweiten Teils (D2) des zweiten Stroms (S2) von Kühlgas, der den ersten Austauscher im Wesentlichen bei T1 verlässt, in einem zweiten Druckreduzierer (E2) erhalten wird, wobei die Strömungsrate D2 des zweiten Teils des zweiten Stroms höher ist als die Strömungsrate D1 des ersten Teils des zweiten Stroms,
(c) wobei der zweite Strom von Kühlgas (S2), der auf den Druck P3 komprimiert ist, durch Kompression durch wenigstens zwei Kompressoren (C1, C2, C3) und Kühlung (H1, H2) des ersten und dritten Stroms (S1, S3) von Kühlgas, die den ersten Austauscher (EC1) bei P1 bzw. P2 verlassen (AA), vorzugsweise durch wenigstens zwei erste und zweite Kompressoren (C1, C2), die in Serie angeordnet sind und jeweils mit dem ersten und zweiten Druckreduzierer (E1, E2), die aus Turbinen bestehen, verbunden sind, erhalten wird, und
(d) vorzugsweise nach Schritt (a) das verflüssigte Erdgas, das den dritten Austauscher T3 verlässt (DD), gegebenenfalls von dem Druck PO auf atmosphärischen Druck dekomprimiert wird.

6. Verfahren nach Anspruch 5, **dadurch gekennzeichnet, dass** der Druck P2 auf kontrollierte Weise variiert wird, so dass die Energie, die zur Durchführung des Verfahrens (Ef) verbraucht wird, bei einem Minimum liegt, vorzugsweise wenn die Zusammensetzung des zu verflüssigenden Erdgases variiert.

7. Verfahren nach einem der Ansprüche 5 oder 6, **dadurch gekennzeichnet, dass** wenigstens ein Kompressor (C1) mit einem Motor (M1) gekoppelt ist, der es ermöglicht, den Druck P2 auf kontrollierte Weise zu variieren, indem dem Kompressor auf kontrollierte Weise Energie zugeführt wird, wobei der Motor (M1) vorzugsweise jeweils wenigstens 5 %, vorzugsweise von 5 bis 30 % der bereitgestellten Gesamtleistung bereitstellt, die von allen Kompressoren (C1, C2, C3) verwendet wird.

8. Verfahren nach einem der Ansprüche 5 bis 7, wobei wenigstens ein erster Kompressor (C1) verwendet wird, der den gesamten ersten Strom von Kühlgas, der den ersten Austauscher (EC1) verlässt (AA), von P1 auf P2 komprimiert wird, und wenigstens ein zweiter Kompressor (C2), der von P2 auf wenigstens P'3 komprimiert, wobei P'3 ein Druck ist, der kleiner oder gleich P3 und größer als P2 ist, wobei zuerst der dritte Strom (S3) von Kühlgas den ersten Austauscher (EC1) bei P2 verlässt und zweitens der erste Strom des auf P2 komprimierten Kühlgases den ersten Kompressor verlässt, um den zweiten Strom von Kühlgas bei P3 und T0 nach der Kühlung (H1, H2) zu erhalten, **dadurch gekennzeichnet, dass**:
- die beiden in Serie angeordneten ersten und zweiten Kompressoren (C1, C2) jeweils mit dem ersten und zweiten Druckreduzierer (E1, E2) gekoppelt sind, die aus Energierückgewinnungsturbinen bestehen, und
- wenigstens der erste Kompressor (C1) mit einem ersten Motor (M1) gekoppelt ist, und
- eine Gasturbine (GT) entweder mit dem zweiten Kompressor gekoppelt ist, wobei letzterer den zweiten Strom von Kühlgas direkt auf P3 komprimiert, oder mit einem dritten Kompressor (C3), der in Serie hinter dem zweiten Kompressor (C2) geschaltet ist, wobei der dritte Kompressor den zweiten Strom von Kühlgas von P'3 auf P3 komprimiert, wobei die Gasturbine den Hauptteil der Gesamtleistung bereitstellt, die an alle verwendeten Kompressoren (C1, C2, C3) bereitgestellt wird.

9. Verfahren nach Anspruch 7 oder 8, **dadurch gekennzeichnet, dass** zwei Kompressoren (C1, C2) verwendet werden, die in Serie verbunden sind, umfassend:
(i) einen ersten Kompressor (C1), der mit dem ersten Druckreduzierer (E1) gekoppelt ist und den gesamten ersten Strom von Kühlgas, der den ersten Austauscher (EC1) verlässt (AA), von P1 auf P2 komprimiert wird, und
(ii) einen zweiten Kompressor (C2), der mit dem zweiten Druckreduzierer (E2) gekoppelt ist und von P2 auf wenigstens P'3 komprimiert wird, wobei P'3 höher als P2 und niedriger als oder gleich P3 ist, wobei zuerst der dritte Strom (S3) von Kühlgas, der den ersten Austauscher (EC1) bei P2 verlässt, und zweitens der erste Strom von Kühlgas, welcher auf P2 komprimiert ist, der den ersten Kompressor verlässt, komprimiert werden, um den zweiten Strom von Kühlgas bei P3 und TO nach dem Abkühlen (H1, H2) zu erhalten, und
(iii) der erste Kompressor (C1) mit einem ersten Motor (M1) gekoppelt ist und der zweite Kompressor (C2) mit einer Gasturbine (GT) gekoppelt ist, wobei der erste Motor es ermöglicht, den Druck P2 in einer kontrollierten Weise zu variieren, indem er dem ersten Kompressor C1 in einer kontrollierten Weise Leistung zuführt, wobei der erste Motor (M1) wenigstens 3 %, vorzugsweise wieder von 3 bis 30 % der gesamten Leistung, die allen verwendeten Kompressoren (C1, C2) zugeführt wird, bereitstellt, wobei der zweite Kompressor (C2) durch eine Gasturbine (GT) angetrieben wird, welche von 97 bis 70 % der gesamten verwendeten Leistung bereitstellt.

10. Verfahren nach Anspruch 7 oder 8, **dadurch gekennzeichnet, dass** drei in Serie geschaltete Kompressoren (C1, C2, C3) verwendet werden, umfassend:
(i) einen ersten Kompressor (C1), der von einem ersten Motor (M1) angetrieben wird und mit dem ersten Druckreduzierer (E1) gekoppelt ist, der den gesamten ersten Strom von Kühlgas, der den ersten Austauscher (EC1) verlässt (AA), von P1 auf P2 komprimiert, und
(ii) einen zweiten Kompressor (C2), der durch einen zweiten Motor (M2) angetrieben wird, welcher mit dem zweiten Druckreduzierer (E2) gekoppelt ist, und der von P2 bis P'3, wobei P'3 höher als P2 und niedriger als P3 ist, zuerst den dritten Strom (S3) von Kühlgas, der den ersten Austauscher (EC1) bei P2 verlässt, und zweitens den ersten Strom von Kühlgas, der auf P2 komprimiert ist und den ersten Kompressor C1 verlässt, komprimiert, und
(iii) wenigstens einen dritten Kompressor (C3), der von einer Gasturbine (GT) angetrieben wird, um den größten Teil der Energie bereitzustellen und den gesamten ersten und dritten Strom von komprimierten Kühlgasen, die den zweiten Kompressor (C2) verlassen, von P'3 auf P3 zu komprimieren, um den zweiten Strom von Kühlgas bei P3 und TO nach der Kühlung (H1, H2) zu erhalten, und
(iv) der Motor (M1) wenigstens 3 %, vorzugsweise wieder 3 bis 30 % der Gesamtleistung bereitstellt, die für alle verwendeten Kompressoren (C1, C2, C3) bereitgestellt wird, wobei die mit dem dritten Kompressor (C3) gekoppelte Gasturbine (GT) und der mit dem Kompressor (C2) gekoppelte Motor (M2) zusammen 97 bis 70 % der Gesamtleistung bereitstellen, die für alle verwendeten Kompressoren (C1, C2, C3) bereitgestellt wird.

11. Verfahren nach einem der Ansprüche 1 bis 10, **dadurch gekennzeichnet, dass** die Zusammensetzung des zu verflüssigenden Gases in den folgenden Bereichen für eine Gesamtmenge von 100 % liegt:
- Methan von 80 bis 100 %,
- Stickstoff von 0 bis 20 %,
- Ethan von 0 bis 20 %,
- Propan von 0 bis 20 %, und
- Butan von 0 bis 20 %.

12. Verfahren nach einem der Ansprüche 1 bis 11, **dadurch gekennzeichnet, dass**:
- T0 und T0' von 10 bis 35 °C sind, und
- T3 und T3' von -160 bis -170 °C sind, und
- T2 und T2' von -100 bis -140 °C sind, und
- T1 und T1' von -30 bis -70 °C sind.

13. Verfahren nach einem der Ansprüche 1 bis 12, **dadurch gekennzeichnet, dass**:
- P0 von 0,5 bis 5 MPa ist, und
- P1 von 0,5 bis 5 MPa ist, und
- P2 von 1 bis 10 MPa ist, und
- P3 von 5 bis 20 MPa ist.

14. Verfahren nach einem der Ansprüche 6 bis 13, **dadurch gekennzeichnet, dass** P2 so lange variiert wird, bis die minimale Gesamtenergie Ef, die bei dem Verfahren verbraucht wird, kleiner als 21,5 kW x Tag/t erzeugtes Flüssiggas ist, vorzugsweise von 18,5 bis 20,5 kW x Tag/t.

## Claims

1. A method for liquefying natural gas comprising mainly methane, preferably at least 85% methane, the other components comprising essentially nitrogen and C2 to C4 alkanes, wherein said natural gas to be liquefied is liquefied by circulating said natural gas at a pressure PO greater than or equal to atmospheric pressure (Patm), preferably PO being higher than atmospheric pressure, in at least one cryogenic heat exchanger (EC1, EC2, EC3) by circulating in counter-current closed circuit in indirect contact with at least one flow of coolant gas remaining in the gaseous state compressed at a pressure P1 entering said cryogenic exchanger at a temperature T3' lower than T3, T3 being the liquefaction temperature of said liquefied natural gas discharged from said cryogenic exchanger, T3 being lower than or equal to the liquefaction temperature of said liquefied natural gas at atmospheric pressure, **characterized in that** said coolant gas consists essentially of a binary mixture of nitrogen and another constituent chosen from neon and hydrogen where the neon or hydrogen represents 20% to 50% molar of said mixture.

2. The method according to claim 1, **characterized in that** said coolant gas consists of a binary mixture of nitrogen and neon.

3. The method according to one of claims 1 or 2, **characterized in that** said natural gas to be liquefied is liquefied by performing the following concomitant steps of:
(a) circulating said natural gas to be liquefied circulating (Sg) at a pressure PO higher than or equal to atmospheric pressure (Patm), preferably PO being higher than atmospheric pressure, in at least three cryogenic heat exchangers (EC1, EC2, EC3) arranged in series, including:
- a first exchanger (EC1) wherein said natural gas entering at a temperature TO is cooled and leaves (BB) at a temperature T1 lower than TO, then
- a second exchanger (EC2) wherein the natural gas is completely liquefied and emerges (CC) at a temperature T2 lower than T1 and higher than T3, and
- a third exchanger (EC3) wherein said liquefied natural gas is cooled from T2 to T3, and
(b) circulating, in counter-current closed circuit, at least one first flow (S1) of coolant gas in the gaseous state at a pressure P1 lower than P3 in indirect contact with and counter-current of the flow of natural gas (Sg), said first flow (S1) at a pressure P1 passing through the three exchangers (EC1, EC2, EC3) while entering (DD) said third exchanger (EC3) at a temperature T3' lower than T3, and then entering (CC), at a temperature T2' lower than T2, said second exchanger (EC2) and then entering (BB), at a temperature T1' lower than T1, said first exchanger (EC1) and leaving (AA) said first exchanger (EC1) at a temperature TO' lower than or equal to TO,
- said first flow (S1) of coolant gas at P1 and T3' being obtained by expansion, in at least one first pressure reducer (E1), of at least a first part (D1) of at least one second flow (S2) of coolant gas compressed at P3 greater than P1 circulating co-current of said natural gas entering (AA) said first exchanger (EC1) at TO and leaving (CC) said second exchanger (EC2) substantially at T2, and
- a second part (D2) of said second flow (S2) of compressed coolant gas P3 circulating co-current of said natural gas entering (AA) said first exchanger (EC1) at TO and leaving said first exchanger substantially at T1 is expanded in a second pressure reducer (E2) at said pressure P1 and at a said temperature T2'; and is recycled in order to join said first flow at the inlet (CC) of said second exchanger, the flow rate D2 of said second part of the second flow being higher than the flow rate D1 of the first part of the second flow, and
(c) said second flow (S2) compressed at P3 being obtained by compression by at least one compressor (CI, C2, C3) followed by at least one cooling (HI, H2) of said first flow (S1) of recycled coolant gas leaving (AA) said first exchanger (EC1), preferably at least one first compressor (C1) coupled to said first pressure reducer (E1), and
(d) preferably, after step (a), the liquefied natural gas is depressurized from the pressure PO to atmospheric pressure where applicable.

4. The method according to claim 3, **characterized in that** three compressors are used, including a first compressor and a second compressor arranged in parallel, comprising:
- a third compressor (C3) actuated by a motor, preferably a gas turbine GT, in order to compress to P'3, P'3 lying between P1 and P3, the whole of said first flow of coolant gas coming from the outlet (AA) of said first exchanger (EC1), and
- a first compressor (C1) coupled to the first pressure reducer (E1) consisting of a turbine, for compressing, from P'3 to P3, a part (D1') of said first flow of coolant gas, compressed by the third compressor (C3), and
- a second compressor (C2) coupled to the second pressure reducer (E2) consisting of a turbine, for compressing from P'3 to P3 a part (D2') of said first flow of coolant gas compressed by the third compressor (C3).

5. The method according to one of claims 1 to 2, **characterized in that** said natural gas to be liquefied is liquefied by performing the following concomitant steps of:
(a) circulating said natural gas to be liquefied circulating (SG) at a pressure PO higher than or equal to atmospheric pressure (Patm), preferably PO being higher than atmospheric pressure, in at least three cryogenic heat exchangers (EC1, EC2, EC3) arranged in series, including:
- a first exchanger (EC1) wherein said natural gas entering at a temperature TO is cooled and leaves (BB) at a temperature T1 lower than TO, then
- a second exchanger (EC2) wherein the natural gas is completely liquefied and leaves (CC) at a temperature 12 lower than T1 and higher than T3, and
- a third exchanger (EC3) wherein said liquefied natural gas is cooled from T2 to T3, and
(b) circulating in closed circuit at least two flows (SI, S3) of coolant gas in the gaseous state called first and third flows respectively at different pressures P1 and P2, passing through at least two said exchangers in indirect contact with and counter-current of the flow of natural gas (Sg), comprising:
- a first flow of coolant gas (S1) at a pressure P1 lower than P3 passing through the three exchangers (EC1, EC2, EC3) entering (DD) said third exchanger (EC3) at a temperature T3' lower than T3, and then entering (CC), at a temperature T2' lower than T2, said second exchanger (EC2), and then entering (BB), at a temperature T1' lower than T1, said first exchanger (EC1) and leaving (AA) said first exchanger at a temperature TO' lower than or equal to TO, said first flow of coolant gas at P1 and T3' being obtained by expansion, in at least one first pressure reducer (E1), of a first part (D1) of a second flow (S2) of coolant gas compressed to the pressure P3 higher than P2, said second flow (S2) circulating in indirect contact with and co-current of said flow of natural gas (Sg) while entering (AA) said first exchanger (EC1) at TO and said first part (D1) of the second flow leaving (CC) said second exchanger (EC2) substantially at T2, and
- a third flow (S3) at a pressure P2 higher than P1 and lower than P3 circulating in indirect contact with and co-current of said first flow, passing solely through said second and first exchangers (EC2, EC1), entering (CC) said second exchanger at a temperature 12' lower than T2 and leaving (AA) said first exchanger (EC1) at TO' lower than or equal to TO, said third flow (S3) of coolant gas at P2 and T2 being obtained by expansion, in a second pressure reducer (E2), of a second part (D2) of said second flow (S2) of coolant gas leaving said first exchanger substantially at T1, the flow rate D2 of said second part of the second flow being higher than the flow rate D1 of the first part of the second flow,
(c) said second flow of coolant gas (S2) compressed at the pressure P3 being obtained by compression by at least two compressors (CI, C2, C3) and cooling (HI, H2) of said first and third flows (S1, S3) of coolant gas leaving (AA) said first exchanger (EC1) at P1 and respectively P2, preferably by at least two first and second compressors (CI, C2) arranged in series and coupled respectively to said first and second pressure reducers (E1, E2) consisting of turbines, and
(d) preferably, after step (a), the liquefied natural gas leaving (DD) said third exchanger T3 is depressurized from the pressure PO to atmospheric pressure where applicable.

6. The method according to claim 5, **characterized in that** said pressure P2 is varied in a controlled fashion so that the energy consumed for implementing the method (Ef) is at a minimum, preferably when the composition of the natural gas to be liquefied varies.

7. The method according to one of claims 5 or 6, **characterized in that** at least one compressor (C1) is coupled to a motor (M1) making it possible to vary the pressure P2 in a controlled fashion by providing power to said compressor in a controlled fashion, preferably said motor (M1) each providing at least 5%, preferably from 5 to 30%, of the total power provided by all said compressors used (CI, C2, C3).

8. The method according to one of claims 5 to 7, wherein at least one first compressor (C1) is used, compressing from P1 to P2 the whole of said first flow of coolant gas leaving (AA) said first exchanger (EC1), and at least one second compressor (C2), compressing from P2 to at least P'3, P'3 being a pressure lower than or equal to P3 and higher than P2, firstly said third flow (S3) of coolant gas leaving said first exchanger (EC1) at P2 and secondly said first flow of coolant gas compressed to P2 leaving said first compressor, in order to obtain said second flow of coolant gas at P3 and T0 after cooling (HI, H2), **characterized in that**: - the two first and second compressors (CI, C2) arranged in series are coupled respectively to said first and second pressure reducers (E1, E2) consisting of energy-recovery turbines, and
- at least said first compressor (C1) is coupled to a first motor (M1), and
- a gas turbine (GT) is coupled either to said second compressor, the latter compressing said second flow of coolant gas directly to P3, or to a third compressor (C3) connected in series after the second compressor (C2), said third compressor compressing said second flow of coolant gas from P'3 to P3, said gas turbine providing the major part of the total power provided to all said compressors used (CI, C2, C3).

9. The method according to claim 7 or 8, **characterized in that** two compressors (CI, C2) are used, connected in series, comprising:
(i) a first compressor (C1) coupled to said first pressure reducer (E1), compressing from P1 to P2 the whole of said first flow of coolant gas leaving (AA) said first exchanger (EC1), and
(ii) a second compressor (C2) coupled to said second pressure reducer (E2), compressing from P2 to at least P'3, P'3 being higher than P2 and lower than or equal to P3, firstly said third flow (S3) of coolant gas leaving said first exchanger (EC1) at P2 and secondly said first flow of coolant gas compressed to P2 leaving said first compressor, in order to obtain said second flow of coolant gas at P3 and TO after cooling (HI, H2), and
(iii) said first compressor (C1) is coupled to a first motor (M1), and said second compressor (C2) being coupled to a gas turbine (GT), said first motor making it possible to vary the pressure P2 in a controlled fashion by providing power to said first compressor C1 in a controlled fashion, said first motor (M1) providing at least 3%, preferably again from 3 to 30%, of the total power provided to all said compressors used (CI, C2), said second compressor (C2) actuated by a gas turbine (GT) providing from 97 to 70% of the total power used.

10. The method according to claim 7 or 8, **characterized in that** three compressors (C1, C2, C3) connected in series are used, comprising:
(i) a first compressor (C1) actuated by a first motor (M1) and coupled to said first pressure reducer (E1), compressing from P1 to P2 the whole of said first flow of coolant gas leaving (AA) said first exchanger (EC1), and
(ii) a second compressor (C2) actuated by a second motor (M2) coupled to said second pressure reducer (E2), compressing, from P2 to P'3, P'3 being higher than P2 and lower than P3, firstly said third flow (S3) of coolant gas leaving said first exchanger (EC1) at P2, and secondly said first flow of coolant gas compressed to P2 leaving said first compressor C1, and
(iii) at least one third compressor (C3) actuated by a gas turbine (GT) in order to provide the major part of the energy and to compress from P'3 to P3 the whole of the first and third flows of compressed coolant gases leaving said second compressor (C2), in order to obtain said second flow of coolant gas at P3 and TO after cooling (HI, H2), and
(iv) said motor (M1) provides at least 3%, preferably again from 3 to 30%, of the total power provided to all said compressors used (CI, C2, C3), the gas turbine (GT) coupled to said third compressor (C3), and the motor (M2) coupled to the compressor (C2) providing together from 97 to 70% of the total power provided to all said compressors used (CI, C2, C3).

11. The method according to one of claims 1 to 10, **characterized in that** the composition of the gas to be liquefied lies in the following ranges for a total of 100%:
- methane from 80 to 100%,
- nitrogen from 0 to 20%,
- ethane from 0 to 20%,
- propane from 0 to 20%, and
- butane from 0 to 20%.

12. The method according to one of claims 1 to 11, **characterized in that**:
- T0 and T0' are from 10 to 35°C, and
- T3 and T3' are from -160 to -170°C, and
- T2 and T2' are from -100 to -140°C, and
- T1 and T1' are from -30 to -70°C.

13. The method according to one of claims 1 to 12, **characterized in that**:
- P0 is from 0.5 to 5 MPa, and
- P1 is from 0.5 to 5 MPa, and
- P2 is from 1 to 10 MPa, and
- P3 is from 5 to 20 MPa.

14. The method according to one of claims 6 to 13, **characterized in that** P2 is varied until the minimum total energy Ef consumed in the method is less than 21.5 kW x day/t of liquefied gas produced, preferably from 18.5 to 20.5 kW x day/t.
